# EUROPEAN PATENT SPECIFICATION

(11) **EP 4 508 130 B1**
(45) Date of publication and mention of the grant of the patent: **02.09.2026**
(21) Application number: 23719718.1
(22) Date of filing: 13.04.2023
(51) Int. Cl.: C08K 7/20, B05D 7/00, C09D 5/33, C09D 7/62, C09D 7/40, G01S 17/00, C09D 7/61, C08K 3/40

(54) **VEHICLE WITH IMPROVED LIDAR-DETECTABLE AND RADAR TRANSPARENT COATING**
FAHRZEUG MIT VERBESSERTER LIDAR-ERKENNBARER BESCHICHTUNG
VÉHICULE DOTÉ D'UN REVÊTEMENT AMÉLIORÉ DÉTECTABLE PAR LIDAR

(30) Priority: 13.04.2022 EP 22168214; 12.04.2023 EP 23167546
(43) Date of publication of application: 19.02.2025
(73) Proprietor: Ink Invent IP B.V., 3433 PT Nieuwegein (NL)
(72) Inventor: KNOOTE, Jacques Arthur, 3433 PT Nieuwegein (NL); MIJNEN, Paul Willem, 3433 PT Nieuwegein (NL); KERRES, Harald Paul, 3433 PT Nieuwegein (NL); MUIS, Philippus Jacob, 3433 PT Nieuwegein (NL); KNOOTE, Menno Arthur, 3433 PT Nieuwegein (NL); SCHLIJPER, Ramon Maria Henricus, 3433 PT Nieuwegein (NL); MOERENBURG, Joost, 3433 PT Nieuwegein (NL)
(74) Representative: Arnold & Siedsma
(86) International application number: PCT/EP2023/059681
(87) International publication number: WO 2023/198829

(56) References cited:
- EP-A1- 3 822 323
- WO-A1-2021/198120
- US-A- 3 228 897
- US-A- 3 835 087
- US-A- 4 082 427
- US-A1- 2021 179 856
- US-B1- 6 525 111

## Description

### FIELD OF THE INVENTION

The invention relates to a vehicle with a coating useful in Light Detection and Ranging (LIDAR) technology and in Radio Detection and Ranging (RADAR) technology. The invention further relates to a Laser Imaging Detection And Ranging process of said vehicle and to the use of said vehicle or said coating on a substrate (i) in Laser Imaging Detection And Ranging of said vehicle or of said coating on a substrate, (ii) to improve the visibility of said vehicle or of said coating on a substrate under visible light conditions and/or (iii) to prepare a 3-dimensional image of said vehicle or of said coating on a substrate. The invention further relates to a Radio Detection and Ranging process and to the use of spherical glass beads as a transparency improver for radio waves in a coating layer.

### BACKGROUND OF THE INVENTION

Vehicles, such as cars, bikes, motorcycles and scooters, are typically provided with a clearcoat top layer to protect them, for example against oxidation or weathering, and to provide the overall coating with a glossy appearance. This glossy clearcoat top layer may be appealing from an aesthetic point of view but it deteriorates the detectability of the vehicle using Light Detection and Ranging (LIDAR) technology. For a proper determination of the distance to a vehicle or the exact contours of a vehicle under different viewing angles with LIDAR technology, increased Lambertian reflectance of electromagnetic radiation at LIDAR wavelengths is preferred over specular reflection or retroreflection, due to the disturbing influence of 100% specular or 100% retroreflection. Lambertian reflectance is the property that defines an ideal matte or diffusely reflecting surface. In this respect, reference is made to A. Höpe, Experimental Methods in the Physical Sciences, 46, Chapter 6 - Diffuse Reflectance and Transmittance, 2014, pp 179-219, which is herein incorporated by reference in its entirety. The apparent brightness of a Lambertian surface to an observer is the same regardless of the observer's angle of view. By definition, 100% Lambertian reflectance defines the whitest white, *i.e.* the most visible color.

WO03/016964A2 discloses a retroreflective coating system that includes retroreflective microspheres for wet-on-wet application to an automotive body panel. It is described that the retroreflective coating system provides satisfactory gloss and retroreflectivity and optimally enhances the visibility to others to ensure safety. Figure 4 of WO03/016964A2 depicts an embodiment wherein a substrate is covered with a basecoat layer BC comprising binder, retroreflective microspheres and pigments with a clearcoat layer CC on top of the basecoat layer.

RADAR sensors are used in vehicles for adaptive cruise control and for blind-spot, lane-change and cross-traffic assistants. RADAR sensors for acquisition of the surroundings are key components for future vehicles with semi-autonomous and fully autonomous driving functionalities. Autonomous driving requires RADAR technology that reliably detects objects in the surrounding area. Automotive RADAR sensors are usually integrated invisibly behind vehicle bumpers. Vehicle bumpers are typically made of plastic with a metallic coating layer thereon, often in the same colour as the remaining part of the coachwork, comprising metal flake pigments, such as for example aluminium flake pigments. The presence of these metal flake pigments adversely affects the transparency of the coating for RADAR signals. Further relevant background prior art includes WO2021/198120A1, US6525111B1 and US3835087A.

It is an object of the invention to provide glossy coatings for vehicles that provide improved LIDAR detectability.

It is an object of the invention to provide glossy coatings for vehicles that provide improved transparency to RADAR signals.

It is a further object of the invention to provide glossy coated substrates that provide improved LIDAR detectability.

It is a further object of the invention to provide glossy coated substrates that provide improved transparency to RADAR signals.

It is another object of the invention to improve LIDAR detectability of vehicles.

### SUMMARY OF THE INVENTION

The inventors have unexpectedly established that one or more of the objectives can be met by using a coating comprising retroreflective microspheres and pigment flakes with high aspect ratio, particularly when the ratio of the median diameter D50 of said pigment flakes is greater than 35% of the median particle diameter D50 of said retroreflective microspheres.

Accordingly, in a first aspect, the invention provides a vehicle having a frame or coachwork, wherein at least part of the outer surface of the frame or coachwork is covered with a coating, said coating comprising at least two layers, wherein the outer two or three layers are:
(a) a basecoat layer;
(b) optionally a tinted clearcoat layer on (a);
(c) a clearcoat top layer on (a) or on (b);
wherein the basecoat layer (a) consists of, based on the weight of said basecoat layer (a):
- 14.95 - 98.95 wt.% of binder;
- 1 - 85 wt.% of spherical glass beads having a median particle diameter D50, as measured with laser diffraction, between 1 and 150 µm, and having a refractive index, measured at a wavelength λ of 589 nm, between 1.7 and 2.8;
- 0.05 - 30 wt.% of pigment flakes chosen from the group consisting of metallic pigment flakes, pearlescent pigment flakes or a combination thereof, said pigment flakes having a median diameter D50, as measured with laser diffraction, between 1 and 75 µm, a thickness smaller than 1 µm and an aspect ratio (flake diameter/thickness) of at least 10; and
- 0 - 30 wt.% of further ingredients,
wherein the median diameter D50 of said pigment flakes is greater than 35% of the median particle diameter D50 of said spherical glass beads.

The inventors have found that a vehicle with this coating has improved LIDAR detectability, particularly at increased angles of incidence, *i.e.* at increased angles from normal incidence. In other words, the coating improves not only the frontal view of the vehicle, but rather the whole LIDAR scannable contours of the vehicle.

Moreover, the inventors have found that a vehicle with this coating has improved transparency for RADAR signals, as compared to similar coatings not comprising the spherical glass beads. For example, a plastic bumper, as part of the frame or coachwork of the vehicle, covered with this coating has improved transparency for RADAR signals, as compared to a plastic bumper covered with a similar coating not comprising the spherical glass beads.

In a second aspect, the invention provides a process of Laser Imaging Detection And Ranging (LIDAR) of the vehicle as defined herein, said process comprising the steps of:
(i) providing a LIDAR device comprising a source of electromagnetic radiation, a receiver and optionally a Global Positioning System (GPS);
(ii) transmitting electromagnetic radiation from the source of electromagnetic radiation of the LIDAR device to the vehicle;
(iii) scanning the electromagnetic radiation reflected by the coating of the vehicle by the receiver of the LIDAR device; and
(iv) computing from the differences between the transmitted electromagnetic radiation and the scanned reflected electromagnetic radiation, preferably as a function of time, one or more of:
   - the distance between the vehicle and the LIDAR device;
   - the acceleration of the vehicle;
   - the deceleration of the vehicle;
   - the direction of movement of the vehicle;
   - the speed of the vehicle, preferably the speed of the vehicle relative to that of the LIDAR device; and
   - a 3D image of the vehicle.

In a third aspect, the invention provides the use of the vehicle as defined herein or a coated substrate comprising at least two layers of which the outer two or three layers are:
(a) a basecoat layer;
(b) optionally a tinted clearcoat layer on (a);
(c) a clearcoat top layer on (a) or on (b);
wherein the basecoat layer (a) consists of, based on the weight of said basecoat layer (a):
- 14.95 - 98.95 wt.% of binder;
- 1 - 85 wt.% of spherical glass beads having a median particle diameter D50, as measured with laser diffraction, between 1 and 150 µm, and having a refractive index, measured at a wavelength λ of 589 nm, between 1.7 and 2.8;
- 0.05 - 30 wt.% of pigment flakes chosen from the group consisting of metallic pigment flakes, pearlescent pigment flakes or a combination thereof, said pigment flakes having a median diameter D50 between 1 and 75 µm, as measured with laser diffraction, a thickness smaller than 1 µm and an aspect ratio (flake diameter/thickness) of at least 10; and
- 0 - 30 wt.% of further ingredients,
wherein the median diameter D50 of said pigment flakes is greater than 35% of the median particle diameter D50 of said spherical glass beads,
- in Laser Imaging Detection And Ranging (LIDAR) of said vehicle or of said coated substrate; and/or
- to improve the visibility of said vehicle or of said coated substrate under visible light conditions; and/or
- to prepare a 3-dimensional image of said vehicle or of said coated substrate.

### BRIEF DESCRIPTION OF THE FIGURES

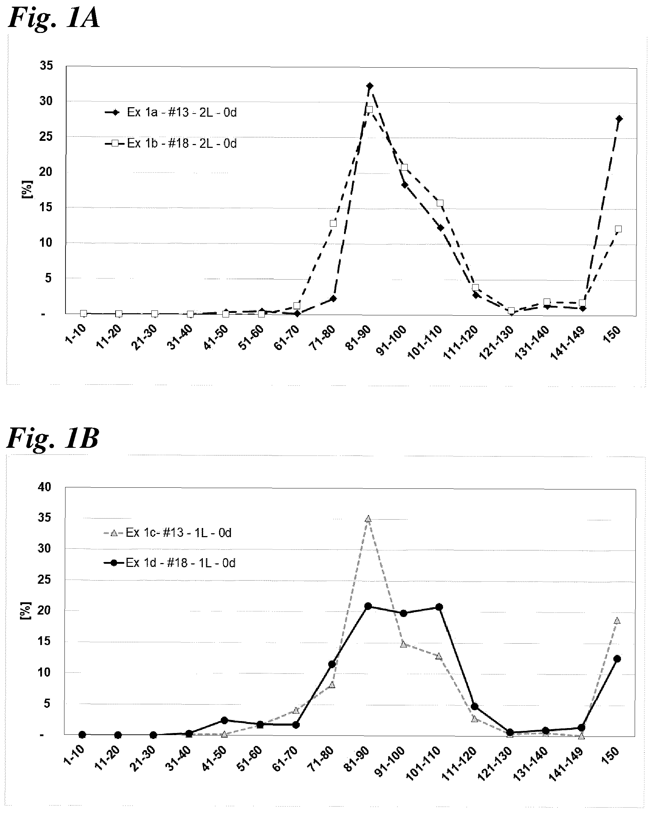

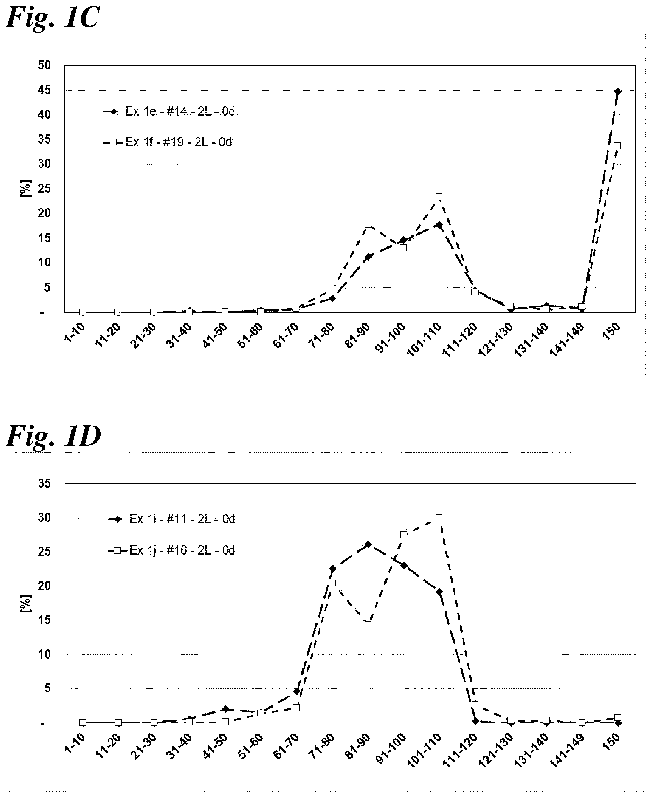

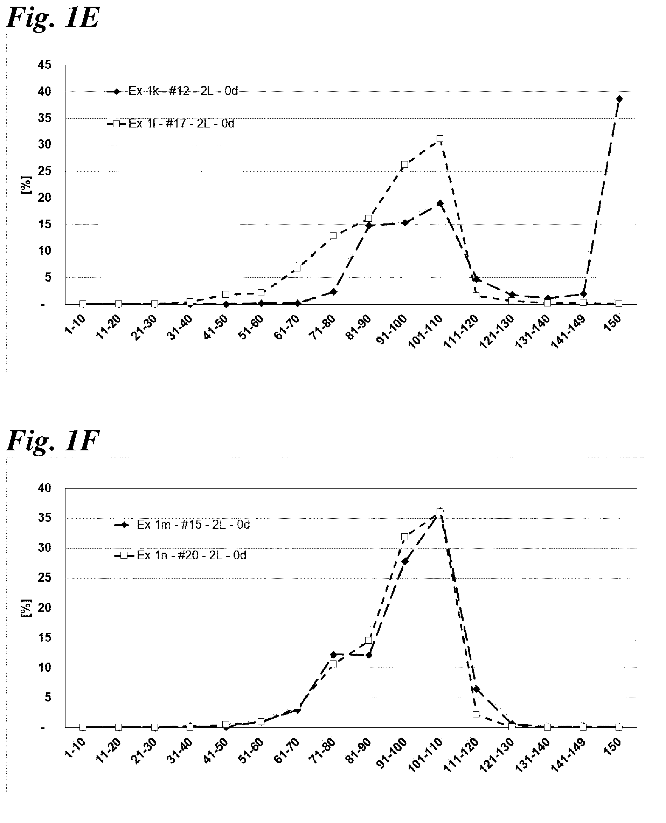

Figures 1A to 1F, 2A to 2E, and 3A to 3D depict LIDAR test results of coated substrates.

### DEFINITIONS

The term *'pigment'* as used herein refers to particulate colorants, such as spherical parts or flakes. They are insoluble in the binder or solvent used.

The term *'dye'* as used herein refers to colorants that can be molecularly dissolved in the binder or solvent used.

The term *'colorant'* as used herein includes pigments as well as dyes.

The term *'titanium suboxides'* as used herein refers to titanium oxide compound with the formula Ti*ₙ*O*₂ₙ₋₁,* wherein *n* is an integer greater than 1.

The term '*LIDAR*' is an acronym of *'light detection and ranging'* or '*laser imaging, detection, and ranging'* and concerns a method for determining ranges (variable distance) to an object, speed of an object and 3D-representations of an object by targeting the object with electromagnetic radiation, typically laser light, and measuring the time for the reflected electromagnetic radiation to return to a receiver.

The term '*RADAR*' is an acronym of *'radio detection and ranging'* and concerns a method for determining the distance, angle and radial velocity of objects by targeting the objects with radio waves, and measuring the time for the reflected radio waves to return to a receiver.

### DETAILED DESCRIPTION

### Vehicle

In a first aspect, the invention concerns a vehicle having a frame or coachwork, wherein at least part of the outer surface of the frame or coachwork is covered with a coating, said coating comprising at least two layers, wherein the outer two or three layers are:
(a) a basecoat layer;
(b) optionally a tinted clearcoat layer on (a);
(c) a clearcoat top layer on (a) or on (b);
wherein the basecoat layer (a) consists of, based on the weight of said basecoat layer (a):
- 14.95 - 98.95 wt.% of binder or resin;
- 1 - 85 wt.% of spherical glass beads having a median particle diameter D50, as measured with laser diffraction, between 1 and 150 µm, and having a refractive index, measured at a wavelength λ of 589 nm, between 1.7 and 2.8;
- 0.05 - 30 wt.% of pigment flakes chosen from the group consisting of metallic pigment flakes, pearlescent pigment flakes or a combination thereof, said pigment flakes having a median diameter D50 between 1 and 75 µm, as measured with laser diffraction, a thickness smaller than 1 µm and an aspect ratio (flake diameter/thickness) of at least 10; and
- 0 - 30 wt.% of further ingredients,
wherein the median diameter D50 of said pigment flakes is greater than 35% of the median particle diameter D50 of said spherical glass beads.

As will be appreciated by those skilled in the art, the wording *'the basecoat layer (a) consists of'* means that the combined amounts of binder/resin, spherical glass beads, pigment flakes and further ingredients add up to 100 wt.% of the basecoat layer (a).

The term *'vehicle'* as used herein refers to a physical object used for transporting people or goods. Non-limiting examples of vehicles in the context of this invention are chosen from the group consisting of cars, lorries, trucks, bikes, mopeds, scooters, motorcycles, trains, trams, boats, ships, drones, skateboards, missiles, helicopters and aircrafts. In a preferred embodiment, the vehicle is chosen from cars, lorries, trucks, bikes, mopeds, scooters and motorcycles.

The part of the outer surface of the frame or coachwork to which the coating is applied may for example be a metallic part, a carbon fiber part, a composite part, a plastic part, a truck tarpaulin or canvas and combinations thereof.

The part of the outer surface of the frame or coachwork to which the coating is applied may for example be a metallic outer surface, a carbon fiber outer surface, a composite outer surface, a plastic outer surface, a truck tarpaulin or canvas and combinations thereof.

In an embodiment, the part of the outer surface of the frame or coachwork to which the coating is applied is a plastic part. In another embodiment, the part of the outer surface of the frame or coachwork to which the coating is applied is a plastic part and the pigment flakes are chosen from the group consisting of metallic pigment flakes.

In an embodiment, the coating is applied to at least part of the outer surface of a plastic part of the frame or coachwork. In another embodiment, the coating is applied to at least part of the outer surface of a plastic part of the frame or coachwork and the pigment flakes are chosen from the group consisting of metallic pigment flakes.

In an embodiment, at least part of the frame or coachwork is made of plastic and at least part of the outer surface thereof (*i.e.* of the part of the frame or coachwork made of plastic) is covered with the coating. In another embodiment, at least part of the frame or coachwork is made of plastic and at least part of the outer surface thereof (*i.e.* of the part of the frame or coachwork made of plastic) is covered with the coating and the pigment flakes are chosen from the group consisting of metallic pigment flakes.

In an embodiment, more than 1%, preferably more than 10%, more preferably more than 30%, even more preferably more than 50%, still more preferably more than 75%, yet more preferably more than 90% of the outer surface of the frame or coachwork is covered with the coating. In an embodiment, the complete outer surface of the frame or coachwork is covered with the coating.

### Coating

As defined hereinbefore, at least part of the outer surface of the frame or coachwork of the vehicle is covered with a coating, said coating comprising at least two layers, wherein the outer two or three layers are (a) a basecoat layer, optionally (b) a tinted clearcoat layer on (a) and (c) a clearcoat top layer on (a) or (b). Although only the outer two or three layers of the coating have been defined, the coating can also comprise further layers between the outer surface of the frame or coachwork and the basecoat layer (a).

When for example at least part of the frame or coachwork of a *'ready-to-use vehicle'* is provided with the at least two outer layers as defined hereinbefore, the outer surface of the frame or coachwork will typically already contain a primer layer, one or more *'first'* basecoat layers different from basecoat layer (a) and one or more (tinted) clearcoat (top) layers. The at least two outer layers as defined hereinbefore are then applied on top of the already present layers.

Accordingly, in an embodiment, said coating comprises the following layers in the following order:
(i) optionally one or more primer layers on the outer surface of the frame or coachwork;
(ii) optionally one or more *'first'* basecoat layers different from basecoat layer (a) on the outer surface of the frame or coachwork or on (i);
(iii) optionally one or more clearcoat layers and/or tinted clearcoat layers on the outer surface of the frame or coachwork, on (i) or on (ii);
(iv) the basecoat layer (a) on the outer surface of the frame or coachwork, on (i), on (ii) or on (iii);
(v) optionally a tinted clearcoat layer (b) on basecoat layer (a); and
(vi) the clearcoat top layer (c) on basecoat layer (a) or on tinted clearcoat layer (b).

Said coating can also be applied to a sticker, which is subsequently applied onto at least part of the outer surface of the frame or coachwork or, if present, onto at least part of the outer coating layer of the different coating layers already present on a ready-to-use vehicle.

The term *'primer layer'* is well known in the art of paints or coatings for vehicles and concerns an adhesion layer between the substrate to be coated, *i.e.* the outer surface of the frame or coachwork, and the basecoat layer (a) or the *'first'* basecoat layer. A primer layer is typically applied if the adhesion between the substrate to be coated and the basecoat layer is insufficient. Accordingly, whether a primer layer is useful or even mandatory depends on both the nature of the outer surface of the frame or coachwork and the nature of the basecoat layer.

The basecoat layer (a) can be the only colour-providing layer of the coating. In an embodiment, the colour is provided only by the metallic pigment flakes, pearlescent pigment flakes or the combination thereof. However, the basecoat layer (a) can also comprise further colouring agents such as dyes, organic pigments and inorganic pigments, different from the metallic pigment flakes and pearlescent pigment flakes as defined herein.

If a *'first'* basecoat layer is present under the basecoat layer (a), this layer typically is a coloured basecoat layer. The first basecoat layer can comprise metallic pigment flakes, pearlescent pigment flakes, dyes, organic pigments, inorganic pigments and combinations thereof. The *'first'* basecoat layer typically does not comprise spherical glass beads.

The clearcoat top layer (c) and the tinted clearcoat layer (b) can encompass two or more (tinted) clearcoat (top) layers that are applied on top of each other in subsequent steps. The basecoat layer (a) can also encompass two or more basecoat layers that are applied on top of each other in subsequent steps, with the proviso that the overall basecoat layer (a) meets the requirements as defined herein.

The terms *'clearcoat top layer'* and *'clearcoat layer'* are well known in the art of paints or coatings for vehicles and concern a transparent layer, typically without dyes and pigments, that covers a coloured basecoat layer. Clearcoat top layers are applied for different purposes, such as the prevention of oxidation or weathering of the basecoat layer and/or to provide the overall coating with a glossy appearance. In a preferred embodiment, the clearcoat top layer (c) does not comprise dyes and pigments. In a preferred embodiment, the clearcoat top layer (c) does not comprise spherical glass beads. The term *'tinted clearcoat layer'* refers to a coloured clearcoat composition, which is transparent and typically comprises dyes, nanoscale pigments and/or pigment flakes. In a preferred embodiment, the tinted clearcoat layer (b) does not comprise spherical glass beads.

Generally, the types of clearcoat compositions suitable for application in the coating include solvent-based and aqueous clearcoat compositions, powder and powder slurry clearcoat compositions, and thermosetting and thermoplastic clearcoat compositions. The clearcoat composition can be radiation curable. If the clearcoat composition is radiation curable, it can comprise a curing initiator, such as a photoinitiator or a thermal initiator.

In a preferred embodiment, the total thickness of the basecoat layer (a) is between 1 and 300 µm, more preferably between 2 and 75 µm, even more preferably between 3 and 50 µm, still more preferably between 4 and 40 µm, yet more preferably between 5 and 20 µm. The total thickness of the basecoat layer (a) is typically not smaller than the median particle diameter D90 of the spherical glass beads.

In a preferred embodiment, the spherical glass beads in basecoat layer (a) have a median particle diameter D50, as measured with laser diffraction, between 1 and 25 µm, and have a refractive index, measured at a wavelength λ of 589 nm, between 1.9 and 2.6; the pigment flakes chosen from the group consisting of metallic pigment flakes, pearlescent pigment flakes or a combination thereof, have a median diameter D50, as measured with laser diffraction, between 2 and 75 µm, a thickness smaller than 1 µm and an aspect ratio (flake diameter/thickness) of at least 10; and the median diameter D50 of said pigment flakes is greater than 35% of the median particle diameter D50 of said spherical glass beads.

In a very preferred embodiment, the spherical glass beads in basecoat layer (a) have a median particle diameter D50, as measured with laser diffraction, between 1 and 15 µm, and have a refractive index, measured at a wavelength λ of 589 nm, between 2.0 and 2.3; the pigment flakes chosen from the group consisting of metallic pigment flakes, pearlescent pigment flakes or a combination thereof, have a median diameter D50, as measured with laser diffraction, between 3 and 75 µm, a thickness smaller than 1 µm and an aspect ratio (flake diameter/thickness) of at least 10; and the median diameter D50 of said pigment flakes is greater than 45% of the median particle diameter D50 of said spherical glass beads.

The inventors have established that the improved Lidar detectability of the present coating is more pronounced when the coating is a metallic coating and/or has a dark colour.

### Binder or resin

Suitable binders and resins for application in vehicle coatings are generally known to the skilled person. The suitability of the type of binders and resins not only depends on their expected resistance to wear but typically also on the way of applying the precursor of the basecoat (a) layer to the vehicle. Precursor basecoat layer (a) compositions that are applied in a water-based or aqueous form on the one hand and precursor basecoat layer (a) compositions that are applied based on organic solvents on the other hand typically require different binders and resins. Suitable binders and resins for both types of compositions are well known to the skilled person. The binder or resin can be radiation curable. If the binder or resin is radiation curable, the further ingredients can comprise a curing initiator, such as a photoinitiator or a thermal initiator.

### Spherical glass beads

As defined hereinbefore, the basecoat layer (a) comprises spherical glass beads. In preferred embodiments, the term *'glass'* in *'spherical glass beads'* as used herein refers to non-crystalline, amorphous solid and transparent material made of oxides. In other embodiments, the term *'glass'* in *'spherical glass beads'* refers to solid and transparent material made of oxides and containing some microcrystallinity. The refractive index of the spherical glass beads is closely related to the density of the glass, although the relationship is not linear. Because of the nature of glass, the density is approximately an additive function of its composition. Densities of spherical glass beads having refractive indices between 1.5 and 2.8 typically vary between 2.5 and 4.5 g/cm³.

In a preferred embodiment, the spherical glass beads have a refractive index, measured at a wavelength λ of 589 nm, of between 1.9 and 2.6, preferably between 2.0 and 2.3.

In another embodiment, the spherical glass beads as defined herein comprise at least two types of spherical glass beads.

Oxides that can be used in glass are oxides of silicon, boron, aluminium, sodium, barium, vanadium, titanium, lanthanum, strontium, zirconium, potassium, magnesium, iron, calcium, zinc, lithium, barium and lead. The spherical glass beads can for example comprise different combinations of silica (SiO₂), boric oxide (B₂O₃), phosphorous pentoxide (P₂O₅), vanadium pentoxide (V₂O₅), arsenic trioxide (As₂O₃), germanium oxide (GeO₂), calcium oxide (CaO), sodium oxide (Na₂O), magnesium oxide (MgO), zinc oxide (ZnO), aluminium oxide (Al₂O₃), potassium oxide (K₂O), iron oxide (Fe₂O₃), lead oxide (PbO), barium oxide (BaO), barium titanate (BaTiO₃), titanium oxide (TiO₂), lithium oxide (Li₂O), strontium oxide (SrO), lanthanum oxide (La₂O₃), and zirconium oxide (ZrO₂). Silica and boric oxide are generally the lowest in density. Glasses containing large weight percentages of these oxide therefore generally result in glass beads with low refractive indices. The refractive indices can be increased by adding oxides with higher molecular weights. Preferably, the spherical glass beads do not comprise PbO.

Glass beads having refractive indices in the range of 1.5 - 2.51 and their composition in terms of oxides are disclosed in WO2014/109564A1, which is incorporated herein by reference in its entirety. PbO-free transparent glass beads with refractive indices of above 2.15 are disclosed in US4,082,427, which is incorporated herein by reference in its entirety.

The spherical glass beads may be coloured spherical glass beads as long as they remain transparent. Both coloured spherical glass beads made from coloured transparent glass and spherical glass beads provided with a concentric transparent coloured coating are encompassed by the invention. The colour may be the natural colour caused by the composition of the oxides or may be deliberately chosen by adding ingredients having a specific colour. Coloured glass beads having high refractive indices and high transparency are disclosed in WO2014/109564A1.

Accordingly, in an embodiment, at least part of the spherical glass beads are spherical glass beads made from coloured transparent glass and/or at least part of the spherical glass beads is provided with a concentric transparent coloured coating.

The spherical glass beads have a median particle diameter D50, as measured with laser diffraction. Accordingly, the median particle diameter D50 is a volume median, based on a volume distribution. The median particle diameter D50 is the diameter where half of the population of spherical glass beads lies below. This volume median particle diameter is often referred to in the art as Dv50 or D_{v0.5}.

In a preferred embodiment, the spherical glass beads have a median particle diameter D50, as measured with laser diffraction, between 1.5 and 100 µm, more preferably between 2 and 50 µm, even more preferably between 2.5 and 20 µm, still more preferably between 3 and 10 µm, such as between 3 and less than 10 µm or between 3 and less than 9.5 µm.

In another embodiment, the spherical glass beads have a median particle diameter D50, as measured with laser diffraction, between 10 and 150 µm, such as between 15 and 150 µm, between 20 and 150 µm, between 25 and 150 µm, between 30 and 150 µm or between 35 and 150 µm.

In a very preferred embodiment, the spherical glass beads have a median particle diameter D50, as measured with laser diffraction, between 1 and 100 µm, such as between 1 and 75 µm, between 1 and 50 µm, between 1 and 45 µm, between 1 and 40 µm, between 1 and 35 µm, between 1 and 30 µm, between 1 and 25 µm, between 1 and 20 µm, between 1 and 15 µm, between 1 and 10 µm, between 1 and less than 10 µm, between 1 and 9.5 µm, between 1 and 9 µm or between 1 and 8.

In a preferred embodiment, the spherical glass beads have a median particle diameter D50, as measured with laser diffraction, between 5 and 100 µm, more preferably between 5 and 75 µm, even more preferably between 5 and 50 µm, such as between 5 and 45 µm, between 5 and 40 µm, between 5 and 35 µm, between 5 and 30 µm, between 5 and 25 µm, between 5 and 20 µm or between 5 and 15 µm.

The diameters D10 and D90 are often referred to in the art as Dv10 or D_{v0.1} and Dv90 or D_{v0.9}, respectively. The D10 diameter is the diameter where 10% of the population of spherical glass beads lies below. Similarly, the D90 diameter is the diameter where 90% of the population of spherical glass beads lies below.

The span, as measured by laser diffraction, of the particle size distribution of the spherical glass beads is defined by: $span = \frac{D 90 - D 10}{D 50}$

In another embodiment, the spherical glass beads have a median particle diameter D50, as measured with laser diffraction, between 1 and 100 µm and a span between 0 and 1.9, preferably between 0 and 1.5, more preferably between 0 and 1, even more preferably between 0 and 0.5, such as between 0 and 0.2 or between 0 and 0.1.

In a preferred embodiment, the spherical glass beads have a median particle diameter D50, as measured with laser diffraction, between 1 and 50 µm and a span between 0 and 1.9, preferably between 0 and 1.5, more preferably between 0 and 1, even more preferably between 0 and 0.5, such as between 0 and 0.2 or between 0 and 0.1.

In another preferred embodiment, the spherical glass beads have a median particle diameter D50, as measured with laser diffraction, between 1 and 25 µm and a span between 0 and 1.9, preferably between 0 and 1.5, more preferably between 0 and 1, even more preferably between 0 and 0.5, such as between 0 and 0.2 or between 0 and 0.1.

In yet another preferred embodiment, the spherical glass beads have a median particle diameter D50, as measured with laser diffraction, between 1 and 15 µm and a span between 0 and 1.9, preferably between 0 and 1.5, more preferably between 0 and 1, even more preferably between 0 and 0.5, such as between 0 and 0.2 or between 0 and 0.1.

In still another preferred embodiment, the spherical glass beads have a median particle diameter D50, as measured with laser diffraction, between 1 and 10 µm and a span between 0 and 1.9, such as between 0 and 1.5, between 0 and 1, between 0 and 0.5, between 0 and 0.2 or between 0 and 0.1.

In still another preferred embodiment, the spherical glass beads have a median particle diameter D50, as measured with laser diffraction, between 1 and less than 10 µm and a span between 0 and 1.9, such as between 0 and 1.5, between 0 and 1, between 0 and 0.5, between 0 and 0.2 or between 0 and 0.1.

In still another preferred embodiment, the spherical glass beads have a median particle diameter D50, as measured with laser diffraction, between 1 and 8 µm and a span between 0 and 1.9, such as between 0 and 1.5, between 0 and 1, between 0 and 0.5, between 0 and 0.2 or between 0 and 0.1.

As will be appreciated by those skilled in the art, *span* = 0 corresponds to monodisperse spherical glass beads.

In a preferred embodiment, the spherical glass beads are not hemispherically coated with a light-reflective coating, such as for example hemispherical aluminium coating (HAC).

In an embodiment, at least part of the spherical glass beads is fluoro-chemically coated. In another embodiment, at least part of the spherical glass beads is silane coated. In another embodiment, at least part of the spherical glass beads is silicone coated.

In a preferred embodiment, the amount of the spherical glass beads is 1.5 - 80 wt.%, more preferably 2 - 70 wt.%, even more preferably 3 - 65 wt.%, based on the weight of the basecoat layer (a).

In embodiments, the amount of the spherical glass beads is 1 - 80 wt.%, 1 - 75 wt.%, 1 - 70 wt.%, 1 - 65 wt.%, 1 - 60 wt.%, 1 - 55 wt.%, 1 - 50 wt.%, 1 - 45 wt.%, 1 - 40 wt.%, 1 - 35 wt.%, 1 - 30 wt.%, 1 - 25 wt.%, 1 - 20 wt.%, 1 - 15 wt.% or 1 - 10 wt.%, based on the weight of the basecoat layer (a).

In other embodiments, the amount of the spherical glass beads is 2 - 85 wt.%, 5 - 85 wt.%, 10 - 85 wt.%, 15 - 85 wt.%, 20 - 85 wt.%, 25 - 85 wt.% or 30 - 85 wt.%, based on the weight of the basecoat layer (a).

### Pigment flakes

The basecoat layer (a) comprises between 0.05 and 30 wt.% of pigment flakes chosen from the group consisting of metallic pigment flakes, pearlescent pigment flakes or a combination thereof, based on the weight of the basecoat layer (a), said pigment flakes having a median diameter D50, as measured with laser diffraction, between 1 and 75 µm, a thickness smaller than 1 µm and an aspect ratio (flake diameter/thickness) of at least 10.

In an embodiment, the pigment flakes are chosen from the group consisting of metallic pigment flakes.

Metallic pigment flakes and pearlescent pigment flakes constitute the two main types of (flake-like) special effect pigments. Metallic pigment flakes, also called metal effect pigment flakes, consist of flake-shaped metallic particles, used to give products metallic effect colour or functional properties like anti-corrosion, heat resistance and conductivity. The small metal platelets behave like mirrors and can reflect incident light. Pearlescent pigment flakes simulate the luster of natural pearls and give the materials additional colour effects, such as angular colour dependence. Pearlescent pigments typically have several layers of materials with different refractive indices. Thin flakes of materials with low refractive indices, such as mica, silica, alumina or glass, are typically used as substrates and they are coated with high refractive materials. Substrate-free pearlescent pigment flakes are however also encompassed by the invention.

In a preferred embodiment, the pearlescent pigment flakes have several layers of materials with different refractive indexes, wherein low refractive index material, such as mica, silica, alumina or glass, is used as substrate and wherein the substrate is coated with a material of a higher refractive index.

### Aspect ratio

The terms *'flake'* or *'platelet'* as used herein refers to the shape of pigments having a large surface area and a small thickness. Typically, flakes or platelets are characterized by their *'aspect ratio',* being defined as the largest dimension, *i.e.* the largest diameter of the surface, divided by the smallest dimension, *i.e.* the thickness.

The pigment flakes as used herein have an aspect ratio of at least 10, preferably at least 15, more preferably at least 20, even more preferably at least 30.

In an embodiment, the pigment flakes as used herein have an aspect ratio of between 10 and 500, preferably between 15 and 250, more preferably between 20 and 100.

### Median diameter of the pigment flakes

In a preferred embodiment, the median diameter of the pigment flakes is 1.5 - 65 µm, more preferably 2 - 50 µm, even more preferably 2.5 - 40 µm, still more preferably 3 -35 µm, most preferably 4 - 30 µm.

In another preferred embodiment, the median diameter of the pigment flakes is 1 - 65 µm, such as 1 - 50 µm, 1 - 40 µm, 1 - 35 µm, 1 - 25 µm, 1 - 20 µm, 1 - 15 µm or 1 - 13 µm.

In another embodiment, the median diameter of the pigment flakes is 1.5 - 75 µm, such as 3 - 75 µm, 5 - 75 µm, 7 - 75 µm, 9 - 75 µm or 11 - 75 µm.

### Thickness of the pigment flakes

In a preferred embodiment, the thickness of the pigment flakes is between 10 nm and 950 nm, more preferably between 15 nm and 850 nm, even more preferably between 50 nm and 650 nm.

In another preferred embodiment, the thickness of the pigment flakes is between 10 nm and 200 nm, such as between 10 nm and 150 nm, between 10 nm and 100 nm or between 10 and 50 nm.

In another preferred embodiment, the thickness of the pigment flakes is between 200 nm and 980 nm, such as between 300 nm and 980 nm, between 400 nm and 980 nm or between 500 nm and 980 nm.

### Types of pigment flakes

In a preferred embodiment, the pigment flakes as defined herein are chosen from (A), (B), (C) or a combination thereof:
(A) Metal flakes or mica flakes, optionally coated with at least one layer of one or more components chosen from the group consisting of metal oxides, metals, metal sulphides, titanium suboxides, titanium oxynitrides, FeO(OH), SiO₂, B₂O₃, GeO₂, MgF₂, metal alloys, rare earth compounds, and optionally coated with an outer layer comprising one or more colorants and a binder;
(B) Flakes comprising Al₂O₃, SiO₂, glass, ceramics, graphite or mica platelets coated with at least one layer of one or more components chosen from the group consisting of metal oxides, metals, metal sulphides, titanium suboxides, titanium oxynitrides, FeO(OH), SiO₂, B₂O₃, GeO₂, metal alloys, rare earth compounds, and optionally coated with an outer layer comprising one or more colorants and a binder; and
(C) Flakes comprising Al₂O₃ platelets doped with one or more components chosen from the group consisting of TiO₂, ZrO₂, SiO₂, SnO₂, In₂O₃, ZnO and iron oxide, coated with at least one layer of one or more components chosen from the group consisting of metal oxides, metals, metal sulphides, titanium suboxides, titanium oxynitrides, FeO(OH), SiO₂, B₂O₃, GeO₂, metal alloys, rare earth compounds, and optionally coated with an outer layer comprising one or more colorants and a binder.

In a preferred embodiment, the pigment flakes are synthetic pigment flakes. As will be appreciated by those skilled the art, the term *'synthetic'* in *'synthetic pigment flakes'* means that the pigment flakes are not pigment flakes naturally occurring, but they are pigment flakes that have been chemically manufactured or naturally occurring pigment flakes that have been chemically/physically processed. One of the advantages of using synthetic pigment flakes is that they can be produced with very smooth surfaces and high aspect ratios, thereby increasing their reflective properties.

Pigment flakes (A) can have zero to multiple coating layers, such as 1, 2, 3, 4 or 5 coating layers.

In an embodiment, the metal in the metal pigment flakes (A) is chosen from the group consisting of aluminium, silver and gold, preferably aluminium. In an embodiment, metal pigment flakes (A) are aluminium flakes without any coating. Examples of aluminium pigment flakes (A) without any coating include Decomet^{®} aluminium flakes (Schlenk, Germany). Decomet^{®} aluminium pigment flakes typically have a median diameter (D50) of between 10 and 15 µm and a thickness of <50 nm.

In an embodiment, pigment flakes (A) are mica flakes without any coating.

In an embodiment, pigment flakes (A) are mica flakes with several coating layers, such as mica flakes coated with TiO₂, Fe₂O₃ and SnO₂. Examples include Iriodin^{®} Silver-Grey SW pigment flakes (Merck, Germany).

In an embodiment, metal pigment flakes (A) are aluminium pigment flakes coated with at least one layer of one or more components chosen from the group consisting of metal oxides, SiO₂, B₂O₃, and GeO₂. In an embodiment, metal pigment flakes (A) are aluminium flakes coated with an SiO₂ layer.

Examples of suitable aluminium pigment flakes (A) coated with an SiO₂ layer are Aquamet^{®} aluminium flakes (Schlenk, Germany). Aquamet^{®} aluminium flakes typically have a median diameter (D50) of between 5 and 50 µm and a thickness of between 20 nm and 1 µm.

Examples of suitable aluminium pigment flakes (A) coated with MgF₂ are SpectraFlair pigments (VIAVI Solutions Inc., USA), typically having a median diameter (D50) of between 14 and 35 µm and a thickness of between 250 nm and 900 nm.

In an embodiment, flakes (A) are coated with a SiO₂ layer and with an outer layer comprising one or more colorants and a binder for fixation of the one or more colorants. Examples of suitable aluminium pigment flakes (A) coated with an SiO₂ layer and with an outer layer comprising one or more colorants and a binder are Toyal flakes (Toyo Aluminium K.K., Japan). Toyal flakes may have a median diameter (D50) of about 10 µm and a thickness of less than 1 µm, such as about 100 nm.

Examples of metal oxides that can be applied in a coating layer on metal pigment flakes (A) are chosen from the group consisting of TiO₂, ZrO₂, SnO₂, ZnO, MnO₂, MgO, Ce₂O₃, Fe₂O₃, Fe₃O₄, FeTiO₅, Cr₂O₃, CoO, CO₃O₄, VO₂, V₂O₃, NiO and combinations thereof.

Examples of suitable aluminium pigment flakes (A) coated with (i) a first layer consisting of SiO₂, B₂O₃, MnO₂, MgO, GeO₂ or Al₂O₃, (ii) a second Fe₂O₃ layer on top of the first layer and optionally (iii) a third layer of TiO₂, ZrO₂, or Al₂O₃ on top of the second layer are disclosed in US2019/044679A1, which is incorporated herein by reference in its entirety.

Pigment flakes (B) and (C) can have one to multiple coating layers, such as 2, 3, 4 or 5 coating layers.

Examples of metal oxides that can be applied in a coating layer on metal pigment flakes (A) are chosen from the group consisting of TiO₂, ZrO₂, SnO₂, ZnO, MnO₂, MgO, Ce₂O₃, Fe₂O₃, Fe₃O₄, FeTiO₅, Cr₂O₃, CoO, CO₃O₄, VO₂, V₂O₃, NiO and combinations thereof.

In an embodiment, pigment flakes (B) comprise glass platelets, wherein the glass is borosilicate glass. In an very preferred embodiment, pigment flakes (B) comprise Al₂O₃ platelets.

In an embodiment, pigment flakes (B) or (C) are coated with one or more layers of metal oxide, such as with at least one layer of metal oxide chosen from the group consisting of TiO₂, ZrO₂, SnO₂, ZnO, MnO₂, MgO, Ce₂O₃, Fe₂O₃, Fe₃O₄, FeTiO₅, Cr₂O₃, CoO, CO₃O₄, VO₂, V₂O₃, NiO and combinations thereof. In preferred embodiments, pigment flakes (B) or (C) are coated with one or more layers of metal oxide chosen from the group consisting of TiO₂, Fe₂O₃, Fe₃O₄, SnO₂, ZrO₂, Cr₂O₃ and combinations thereof, such as coated with one layer of metal oxide chosen from the group consisting of TiO₂, Fe₂O₃ and a combination thereof.

Examples of pigment flakes (B) comprising Al₂O₃ platelets coated with different layers of metal oxide, SiO₂ and an organic dye as a top coat are disclosed in EP2799398B1, which is incorporated herein by reference in its entirety.

Examples of pigment flakes (B) comprising Al₂O₃ platelets coated with metal oxide chosen from the group consisting of TiO₂, Fe₂O₃ and a combination thereof, and their preparation are disclosed in US6267810B1, which is incorporated herein by reference in its entirety.

Examples of pigment flakes (B) comprising Al₂O₃ platelets coated with a TiO₂ layer or a Fe₂O₃ layer are Xirallic^{®} pigments (Merck, Germany). Xirallic^{®} pigments typically have a median diameter (D50) of between 5 and 50 µm and a thickness of up to 1 µm.

In another embodiment, pigment flakes (B) or (C) are coated with a layer of titanium suboxides (Ti*ₙ*O_{2*n*-1}, with *n* being an integer greater than 1, such as the oxides Ti₃O₅, Ti₂O₃), with a layer of titanium oxynitrides, with a layer of FeO(OH), or with a thin semitransparent metal layer, for example comprising Al, Fe, Cr, Ag, Au, Pt or Pd, or combinations thereof.

In yet another embodiment, pigment flakes (B) or (C) are coated with a layer of a metal sulfide, such as coated with sulfides of tungsten, molybdenum, cerium, lanthanum or rare earth elements.

In another embodiment, pigment flakes (B) or (C) are coated with an outer layer of one or more colorants, for example Prussian Blue or Carmine Red, and a binder for fixation of the colorant.

As will be appreciated by those skilled in the art, these different layers can be combined, provided that the layer of one or more colorants and a binder is, if present, always an outer layer.

Examples of pigment flakes (C) comprising platelets of Al₂O₃ doped with titanium oxide and coated with metal oxide and their manufacture are disclosed in EP0763573B1, which is incorporated herein by reference in its entirety.

Examples of pigment flakes (C) comprising platelets of Al₂O₃ doped TiO₂, ZrO₂, SiO₂, SnO₂, In₂O₃ or ZnO and coated with metal oxide are disclosed in EP2799398B1, which is incorporated herein by reference in its entirety.

### Ratio diameter pigment flakes to diameter spherical glass beads

In a preferred embodiment, the median diameter D50 of the pigment flakes is greater than 36% of the median particle diameter D50 of the spherical glass beads, more preferably greater than 38%, such as greater than 40%, greater than 45%, greater than 50%, greater than 55%, greater than 60%, greater than 70%, greater than 90%, greater than 110% or greater than 130%.

In another preferred embodiment, the median diameter D50 of the pigment flakes is between 35 and 400% of the median particle diameter D50 of the spherical glass beads, more preferably between 40 and 400%, such as between 45 and 400%, between 50 and 400%, between 55 and 400%, between 60 and 400%, between 70 and 400%, between 90 and 400%, between 110 and 400% or between 130 and 400%.

In yet another embodiment, the median diameter D50 of the pigment flakes is between 35 and 350% of the median particle diameter D50 of the spherical glass beads, more preferably between 35 and 300%, such as between 35 and 250%, between 35 and 225%, between 35 and 200%, between 35 and 175%, between 35 and 150%, between 35 and 125%, between 35 and 100% or between 35 and 75%.

### Amount of pigment flakes

In a preferred embodiment, the amount of said pigment flakes in the basecoat layer (a) is 0.1 - 25 wt.%, based on the weight of the basecoat layer (a), such as 0.5 - 20 wt.%, 1 - 18 wt.%, 2 - 16 wt.%, 3 - 14 wt.% or 5 - 13 wt.%.

In an embodiment, the amount of said pigment flakes in the basecoat layer (a) is 0.1 - 24 wt.%, based on the weight of the basecoat layer (a), such as 0.1 - 20 wt.%, 0.1 - 18 wt.%, 0.1 - 16 wt.%, 0.1 - 14 wt.% or 0.1 - 13 wt.%.

In another embodiment, the amount of said pigment flakes in the basecoat layer (a) is 0.5 - 30 wt.%, based on the weight of the basecoat layer (a), such as 1 - 30 wt.%, 2 - 30 wt.%, 5 - 30 wt.%, 8 - 30 wt.% or 10 - 30 wt.%.

The amount of said pigment flakes in the basecoat layer (a) is preferably 1 part by weight to between 1 and 30 part by weight of the spherical glass beads, preferably 1 part by weight to between 1 and 15 part by weight of the spherical glass beads, more preferably 1 part by weight to between 1 and 10 part by weight of the spherical glass beads.

### Further ingredients

As defined hereinbefore, the basecoat layer (a) comprises 0 - 30 wt.% of further ingredients. As will be appreciated by the skilled person, the *'further'* ingredients are different from the other ingredients defined in the basecoat layer (a). In other words, the further ingredients do not comprise said binder, said spherical glass beads and said pigment flakes.

In an embodiment, the further ingredients are chosen from the group consisting of thickeners, foam control agents, luminescent agents, UV-absorbers, preservatives, dyes, curing initiators, organic pigments, inorganic pigments other than the metallic pigment flakes and pearlescent pigment flakes, and combinations thereof.

In embodiments, the amount of the further ingredients is 0.01 - 25 wt.%, 0.02 - 20 wt.%, 0.05 - 18 wt.%, 0.1 - 16 wt.%, 0.2 - 14 wt.%, 0.25 - 12 wt.%, 0.30 - 10 wt.%, or 0.35 - 8 wt.%, based on the weight of basecoat layer (a).

In embodiments, the amount of the further ingredients is 0 - 25 wt.%, 0 - 20 wt.%, 0 - 18 wt.%, 0 - 16 wt.%, 0 - 14 wt.%, 0 - 12 wt.%, 0 - 10 wt.%, or 0 - 8 wt.%, based on the weight of basecoat layer (a).

In other embodiments, the amount of the further ingredients is 0.01 - 30 wt.%, 0.02 - 30 wt.%, 0.05 - 30 wt.%, 0.1 - 30 wt.%, 0.2 - 30 wt.%, 0.25 - 30 wt.%, 0.30 - 30 wt.%, or 0.35 - 30 wt.%, based on the weight of basecoat layer (a).

The basecoat layer (a) typically comprises one or more thickeners as part of the further ingredients. A thickener can provide the composition to be applied to the vehicle, for example a water-based or organic-solvent-based composition, with the required rheology to produce a high quality basecoat layer (a). Without wishing to be bound by any theory, it is believed that the thickener has no specific advantageous properties in the dried, cured or ready-to-use coating on the vehicle.

In an embodiment, the further ingredients comprise a thickener and the amount of the thickener is 0.01 - 3 wt.%, more preferably 0.01 - 2 wt.%, even more preferably 0.01 - 1 wt.%, based on the weight of the basecoat layer (a).

As will be appreciated by those skilled in the art, the type of thickener that is present in the basecoat (a) depends on the way the *'precursor basecoat layer (a) composition'* is applied to the vehicle. Precursor compositions that are applied in water-based or aqueous form on the one hand and compositions that are applied based on organic solvents on the other hand typically require different thickeners to obtain the required rheological properties.

### Thickeners for water-based or aqueous compositions

One preferred group of thickeners for aqueous precursor basecoat layer (a) compositions are ASE polymers (Alkali Swellable Emulsion; these polymers are produced using emulsion polymerization). In an embodiment, the hydrophilic monomers of the ASE polymer are chosen from the group consisting of (meth)acrylic acid, maleic acid and combinations thereof. In another embodiment, the hydrophobic monomers of the ASE polymer are chosen from the group consisting of the esters of (meth)acrylic acid with C₁- to C₄-alcohols, in particular of ethyl acrylate, butyl acrylate, and methyl methacrylate.

Another preferred group of thickeners for aqueous precursor basecoat layer (a) compositions are HASE polymers (Hydrophobically-modified Alkali Swellable Emulsion, these polymers are produced using emulsion polymerization). The hydrophilic and hydrophobic monomers of the HASE polymers can be the same as described with respect to the ASE polymers. Preferred hydrophobic associative monomers are (meth)acrylic ester monomers of (meth)acrylic acid and C₈ - C₂₂-alcohols and/or vinyl ester monomers of (substituted) vinyl alcohols and C₈ - C₂₂-alkyl acids.

Yet another preferred group of thickeners for aqueous precursor basecoat layer (a) compositions are Hydrophobically-modified Ethoxylated URethane (HEUR) polymers. Unlike ASE or HASE-type thickeners, HEUR polymers are non-ionic and soluble at any pH. This solubility is due to the polymer's ethylene oxide backbone, which is water soluble and makes up the majority of the polymer structure. Thus, HEUR polymers require a hydrophobic moiety in the composition to interact with the ethylene oxide backbone to impart structure.

Examples of ASE polymers include Rheovis^{®} 1125 (available from BASF Corporation), ACULYN^{™} 33; ACULYN^{™} 38, ACUSOL^{™} 810A, ACUSOL^{™} 830, ACUSOL^{™} 835, ACUSOL^{™} 842 (all available from DOW Chemical), and Carbopol^{®} Aqua 30 polymer (from Lubrizol Corporation).

Examples of HASE polymers include ACULYN^{™} Excel, ACRYSOL^{™} TT615, ACULYN^{™} 22; ACULYN^{™} 88, ACUSOL^{™} 801S, ACUSOL^{™} 805S, ACUSOL^{™} 820 and ACUSOL^{™} 823 (all available from DOW Chemical).

Examples of HEUR polymers include ACUSOL^{™} 880, ACUSOL^{™} 882, ACULYN^{™} 44 and ACULYN^{™} 46N (all available from DOW Chemical).

In yet another embodiment, the thickeners for aqueous precursor basecoat layer (a) compositions are chosen from the group consisting of ASE polymers, HASE polymers, HEUR polymers, liquid acrylic crosslinked or copolymer dispersions, acrylates crosspolymers, crosslinked polyacrylic acid polymers, crosslinked polyacrylic acid copolymers, non-ionic aqueous emulsions of a modified ethylene vinyl acetate copolymer wax, modified urea or urea-modified polyamides, and combinations thereof.

### Thickeners for organic-solvent-based compositions

Examples of thickeners that can be used in precursor basecoat layer (a) compositions based on organic solvents are preferably chosen from the group consisting of (modified) hydrogenated castor oil, clay, modified clay, calcium sulphonate complex, organophilic phyllosilicate, silica-gel, synthetic amorphous silica, acrylic acid type gellants, modified cellulosic materials, polyurea dispersions, solutions of urea-modified polyamides, polyurethane dispersions and combinations thereof. Examples of modified clay includes BENTONE^{®} LT and BENTONE^{®} 38 (Elementis Global). An example of a silica-gel includes HDK^{®} N20 (Wacker Chemical Corporation), or AEROSIL^{®} (Evonik). An example of organophilic phyllosilicate includes Claytone 40 (Byk). An example of a modified hydrogenated castor oil is Efka^{®} RM 1900 (BASF). An example of a hydrogenated castor oil is Efka^{®} RM 1920 (BASF). An example of a solution of a urea-modified non-polar polyamide in isobutanol/monophenyl glycol is Rheobyk-431 (Byk). An example of a solution of a urea-modified polyamide of medium polarity in isobutanol/solvent naphtha is Rheobyk-430 (Byk). An example of synthetic amorphous silica is Zeothix^{®} (Huber).

In a preferred embodiment, precursor basecoat layer (a) compositions based on organic solvents comprise two thickeners, more preferably:
- an organophilic phyllosilicate and a modified hydrogenated castor oil; or
- a calcium sulphonate complex and a polyurea dispersion.

### Preferred thickeners in basecoat layer (a)

In a preferred embodiment, the basecoat layer (a) comprises one or more thickeners as part of the further ingredients chosen from the group consisting of ASE polymers, HASE polymers, HEUR polymers, liquid acrylic crosslinked or copolymer dispersions, acrylates crosspolymers, crosslinked polyacrylic acid polymers, crosslinked polyacrylic acid copolymers, non-ionic aqueous emulsions of a modified ethylene vinyl acetate copolymer wax, modified urea or urea-modified polyamides, (modified) hydrogenated castor oil, clay, modified clay, calcium sulphonate complex, organophilic phyllosilicate, silica-gel, synthetic amorphous silica, acrylic acid type gellants, modified cellulosic materials, polyurea dispersions, solutions of urea-modified polyamides, polyurethane dispersions and combinations thereof.

### Laser Imaging Detection And Ranging (LIDAR) process

A second aspect of the invention concerns a Laser Imaging Detection And Ranging (LIDAR) process of the vehicle as defined hereinbefore, said process comprising the steps of:
(i) providing a LIDAR device comprising a source of electromagnetic radiation, a receiver and optionally a Global Positioning System (GPS);
(ii) transmitting electromagnetic radiation from the source of electromagnetic radiation of the LIDAR device to the vehicle;
(iii) scanning the electromagnetic radiation reflected by the coating of the vehicle by the receiver of the LIDAR device; and
(iv) computing from the differences between the transmitted electromagnetic radiation and the scanned reflected electromagnetic radiation, preferably as a function of time, one or more of:
   - the distance between the vehicle and the LIDAR device;
   - the acceleration of the vehicle;
   - the deceleration of the vehicle;
   - the direction of movement of the vehicle;
   - the speed of the vehicle, preferably the speed of the vehicle relative to that of the LIDAR device; and
   - a 3D image of the vehicle.

As will be appreciated by those skilled in the art, computing the speed, acceleration, deceleration and direction of movement of the vehicle requires that steps (ii) and (iii) are performed as a function of time.

If the LIDAR device is also equipped with a GPS, the distance between the vehicle and the LIDAR device can also be indicated on a map and the 3D image of the vehicle can be identified on a map.

In a preferred embodiment, the electromagnetic radiation transmitted and scanned in steps (ii) and (iii), respectively, has a wavelength between 740 nm and 2500 nm, preferably a wavelength between 750 nm and 1800 nm, more preferably a wavelength between 780 nm and 1600 nm, such as 905 nm or 1550 nm.

In an embodiment, the electromagnetic radiation transmitted and scanned in steps (ii) and (iii), respectively, has a wavelength between 740 nm and 2200 nm, such as between 740 nm and 2000 nm, between 740 nm and 1800 nm, between 740 nm and 1700 nm, between 740 nm and 1650 nm and between 740 nm and 1600 nm.

In another embodiment, the electromagnetic radiation transmitted and scanned in steps (ii) and (iii), respectively, has a wavelength between 750 nm and 2500 nm, such as between 780 nm and 2500 nm, between 800 nm and 2500 nm, between 825 nm and 2500 nm, between 850 nm and 2500 nm and between 875 nm and 2500 nm.

The LIDAR device can for example be a mobile device, such as a LIDAR gun for checking the speed of vehicles, a device fixed on certain infrastructural elements, for example to determine traffic density, or a mobile device positioned in another vehicle.

### Radio Detection And Ranging (RADAR) process

Another aspect of the invention concerns a Radio Detection And Ranging (RADAR) process comprising the steps of:
(i) providing a vehicle as defined hereinbefore with a RADAR device within the frame or coachwork, said RADAR device comprising a source of radio waves and a receiver, and wherein the vehicle optionally comprises a Global Positioning System (GPS);
(ii) transmitting radio waves from the source of radio waves of the RADAR device through the at least part of the outer surface of the frame or coachwork of the vehicle that is covered with the coating as defined hereinbefore to an object outside of the vehicle;
(iii) scanning the radio waves reflected by the object outside of the vehicle by the receiver of the RADAR device; and
(iv) computing from the differences between the transmitted radio waves and the scanned reflected radio waves, preferably as a function of time, one or more of:
   - the distance between the object and the RADAR device;
   - the acceleration of the object with respect to the RADAR device;
   - the deceleration of the object with respect to the RADAR device;
   - the direction of movement of the object with respect to the RADAR device; and
   - the speed of the object, preferably the speed of the object relative to that of the RADAR device.

The wording *'a RADAR device within the frame or coachwork'* as used herein implies that the frame or coachwork is positioned between the RADAR device and the object outside of the vehicle, such as a RADAR device positioned inside the vehicle behind the bumper to scan objects outside the vehicle in front of the bumper.

In this RADAR process, the part of the outer surface of the frame or coachwork to which the coating is applied preferably is a plastic part, such as a plastic bumper. In a preferred embodiment of this RADAR process, the part of the outer surface of the frame or coachwork to which the coating is applied is a plastic part, such as a plastic bumper, and the pigment flakes are chosen from the group consisting of metallic pigment flakes. The RADAR device comprising the source of radio waves and the receiver is preferably positioned within the frame or coachwork of the vehicle behind the plastic bumper.

In this RADAR process, the part of the outer surface of the frame or coachwork to which the coating is applied preferably is the outer surface of a plastic part, such as the outer surface of a plastic bumper. In a preferred embodiment of this RADAR process, the part of the outer surface of the frame or coachwork to which the coating is applied is the outer surface of a plastic part, such as the outer surface of a plastic bumper, and the pigment flakes are chosen from the group consisting of metallic pigment flakes. The RADAR device comprising the source of radio waves and the receiver is preferably positioned within the frame or coachwork of the vehicle behind the plastic bumper.

As will be appreciated by those skilled in the art, computing the speed, acceleration, deceleration and direction of movement of the object requires that steps (ii) and (iii) are performed as a function of time.

The distance between the object and the RADAR device can be processed to a (real time) image of the surroundings of the vehicle to be shown on video screen inside the vehicle.

If the vehicle is also provided with a GPS, the distance between the object and the RADAR device can also be indicated on a map.

In a preferred embodiment, the radio waves transmitted and scanned in steps (ii) and (iii), respectively, have a wavelength between 3.5 mm and 14.5 mm. In another preferred embodiment, the radio waves transmitted and scanned in steps (ii) and (iii), respectively, have a wavelength between 12.1 mm and 12.6 mm (Short-Range RADAR; SRR). In yet another preferred embodiment, the radio waves transmitted and scanned in steps (ii) and (iii), respectively, have a wavelength between 3.6 mm and 4.0 mm (Long-Range RADAR; LRR).

### Process for coating the outer surface of the frame or coachwork of a vehicle

The basecoat layer (a) is typically provided to the outer surface of the frame or coachwork of the vehicle in the form of an organic-solvent-based composition or in the form of an aqueous or water-based composition. Such a composition is called a *'precursor basecoat layer (a) composition'* in what follows.

These organic-solvent-based, aqueous or water-based precursor basecoat layer (a) compositions thus comprise, in addition to the solid ingredients of the basecoat layer (a) in the relative amounts as defined hereinbefore, a solvent. The amount of solvent in the organic-solvent-based, aqueous or water-based compositions is typically 15 - 75 wt.%, based on the weight of the precursor basecoat layer (a) composition, such as 25 - 65 wt.%.

In other words, a precursor basecoat layer (a) composition may consist of, based on the weight of precursor basecoat layer (a) composition:
(A) 15 - 75 wt.% of water, aqueous solvent or organic solvent; and
(B) 25 - 85 wt.% of a solids composition,
wherein the solids composition (B) consists of, based on the weight of the solids composition (B):
- 14.95 - 98.95 wt.% of binder;
- 1 - 85 wt.% of spherical glass beads having a median particle diameter D50, as measured with laser diffraction, between 1 and 150 µm, and having a refractive index, measured at a wavelength λ of 589 nm, between 1.7 and 2.8;
- 0.05 - 30 wt.% of pigment flakes chosen from the group consisting of metallic pigment flakes, pearlescent pigment flakes or a combination thereof, said pigment flakes having a median diameter D50, as measured with laser diffraction, between 1 and 75 µm, a thickness smaller than 1 µm and an aspect ratio (flake diameter/thickness) of at least 10; and
- 0 - 30 wt.% of further ingredients,
wherein the median diameter D50 of said pigment flakes is greater than 35% of the median particle diameter D50 of said spherical glass beads.

The solvent can for example be an aqueous solvent or water. The term *'aqueous solvent'* as used herein concerns a solvent that comprises at least 70 wt.% of water, based on the weight of the aqueous solvent, preferably at least 80 wt.% of water, more preferably at least 90 wt.% of water, even more preferably at least 95 wt.% of water, such as at least 96 wt.%, at least 97 wt.% or at least 98 wt.% The remaining solvents in the aqueous solvent are not particularly limited, but are typically water-miscible organic solvents, such as an alcohol (for example, methanol, ethanol, propanol, isopropanol, butanol, isobutanol, sec-butanol, t-butanol, pentanol, hexanol, cyclohexanol), a polyhydric alcohol (for example, ethylene glycol, diethylene glycol, triethylene glycol, polyethylene glycol, propylene glycol, dipropylene glycol, polypropylene glycol, butylene glycol, hexanediol, pentanediol, glycerol, hexanetriol, or thiodiglycol), a glycol derivative such as, e.g., an ether or an ester (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether or ethylene glycol monophenyl ether), an amine (for example, ethanolamine, diethanolamine, triethanolamine, *N-*methyldiethanolamine, *N*-ethyldiethanolamine, morpholine, *N*-ethylmorpholine, ethylenediamine, diethylenetriamine, triethylenetetramine, polyethyleneimine or tetramethylpropylenediamine), an amide (for example, formamide, *N,N-* dimethylformamide, or *N*,*N*-dimethylacetamide), dimethylsulfoxide, sulfolane, 2-pyrrolidone, N-methyl-2-pyrrolidone, *N*-vinyl-2-pyrrolidone, 2-oxazolidone, 1,3-dimethyl-2-imidizolidinone, acetonitrile, acetone and combinations thereof.

The organic solvent can be a mixture of organic solvents. Preferred organic solvents are chosen from the group consisting of aliphatic and aromatic solvents, ketones, esters, glycoethers, alcohols, halogenated hydrocarbons, and combinations thereof. Very preferred organic solvent are chosen from the group consisting of xylene (mixture of isomers), toluene, ethylbenzene, naphtha, 1,2,4-trimethylbenzene, mesitylene, n-propylbenzene, isopentyl acetate, *n*-butyl acetate, (2-methoxymethylethoxy)propanol, 2-butoxyethyl acetate, 2-methylbutyl acetate, isobutanol, 1-butanol, 1-ethoxypropane-2-ol, 2,6-dimethyl-4-heptanone, 2-methoxy-1-methylethylacetate, 4,6-dimethyl-heptane-2-one, 4-methyl-2-pentanone, 1-methoxy-2-propanol, 1-methoxy-2-propylacetate, 2-(2-butoxyethoxy)ethanol, 2-butoxyethanol, 5-methylhexane-2-one, ethyl acetate and combinations thereof.

Alternatively, the *'precursor basecoat layer (a) composition'* can also be a reactive system wherein the solvent comprises liquid reactive organic monomers, such as low-molecular-weight acrylates, and wherein the binder comprises reactive higher molecular weight organic resins, that may be dispersed or dissolved in the solvent. Accordingly, solvent and resin may both constitute the liquid phase in the precursor basecoat layer (a) composition and may together form the binder in the basecoat layer (a) upon curing.

In an aspect, the invention concerns a process for coating at least part of the outer surface of the frame or coachwork of a vehicle, said process comprising the steps of:
i) providing a vehicle with a frame or coachwork, said frame or coachwork having an outer surface, wherein at least part of said outer surface may already contain different coating layers;
ii) applying a precursor basecoat layer (a) composition as defined hereinbefore onto at least part of the outer surface of the frame or coachwork of step (i) or onto the outer coating layer of the different coating layers of step (i) to provide a precursor basecoat layer (a);
iii) optionally at least partially drying and curing the precursor basecoat layer (a) of step (ii) to provide basecoat layer (a);
iv) optionally applying a precursor tinted clearcoat layer (b) composition onto at least part of the precursor basecoat layer (a) of step (ii) or onto at least part of the basecoat layer (a) of step (iii) to provide a precursor tinted clearcoat layer (b), optionally followed by at least partially drying and curing to provide tinted clearcoat layer (b);
v) applying a precursor clearcoat layer (c) composition onto at least part of the precursor basecoat layer (a) of step (ii), onto at least part of the basecoat layer (a) of step (iii), onto the precursor tinted clearcoat layer (b) of step (iv) or onto the tinted clearcoat layer (b) of step (iv), followed by drying and curing to provide clearcoat top layer (c).

Step (ii) of applying the precursor basecoat layer (a) composition can comprise applying a single layer in one step or multiple layers on top of each other in subsequent steps. Subsequent layers can be applied *'wet on wet',* meaning that a subsequent layer is applied onto the previous layer from which at least some to practically all solvent is evaporated but which is not (fully) cured. This means that, even when subsequent layers are applied *'wet on wet',* an intermediate drying step is applied between applying the subsequent layers.

It is also possible to completely dry and cure a previous layer before applying a subsequent layer. It is within the skills of the artisan to choose the appropriate drying conditions.

In an embodiment, step (ii) encompasses applying more than one layer, such as 2, 3, 4 or 5 layers.

In an embodiment, step (ii) encompasses *n* subsequent steps resulting in *n* layers, and wherein layer *x* is at least partially applied onto layer *x*-1, wherein *x* is an integer between 2 and *n,* and wherein *n* is an integer between 2 and 5.

Steps (iv) and (v) of applying the precursor (tinted) clearcoat composition can comprise applying a single layer in one step or multiple layers on top of each other in subsequent steps. Subsequent layers can be applied *'wet on wet',* meaning that a subsequent layer is applied onto the previous layer which is not (fully) dried or cured.

In an embodiment, the precursor clearcoat layer (c) composition applied in step (v) is applied on a layer that is not fully dried or cured, *i.e.* applied *'wet on wet'.* It is within the skills of the artisan to choose the appropriate drying conditions.

The geometry of the outer surface of the frame or coachwork to be coated is not limited in any sense as long as it can be coated, for example by spraying. In embodiments, the outer surface of the frame or coachwork to be coated is planar. In other embodiments the outer surface of the frame or coachwork to be coated is curved. In further embodiments, the outer surface of the frame or coachwork to be coated comprises planar parts and curved parts.

Step (ii) of applying the precursor basecoat layer (a) composition is preferably performed using powder coating, electrostatic atomization, curtain coating, a spray gun, a high-speed rotary bell, a high-speed rotating disc or using a spray can with a propellant. In a preferred embodiment, spraying is performed without using a propellant.

In another preferred embodiment, the outer two or three coating layers as defined hereinbefore are applied to a sticker, which is subsequently applied onto at least part of the outer surface of the frame or coachwork or, if present, onto at least part of the outer coating layer of the different coating layers already present on the vehicle.

### Uses

In a third aspect, the invention concerns the use of the vehicle as defined herein or a coated substrate, wherein the coating comprises at least two layers of which the outer two or three layers are:
(a) a basecoat layer;
(b) optionally a tinted clearcoat layer on (a);
(c) a clearcoat top layer on (a) or on (b);
wherein the basecoat layer (a) consists of, based on the weight of said basecoat layer (a):
- 14.95 - 98.95 wt.% of binder;
- 1 - 85 wt.% of spherical glass beads having a median particle diameter D50, as measured with laser diffraction, between 1 and 150 µm, and having a refractive index, measured at a wavelength λ of 589 nm, between 1.7 and 2.8;
- 0.05 - 30 wt.% of pigment flakes chosen from the group consisting of metallic pigment flakes, pearlescent pigment flakes or a combination thereof, said pigment flakes having a median diameter D50 between 1 and 75 µm, as measured with laser diffraction, a thickness smaller than 1 µm and an aspect ratio (flake diameter/thickness) of at least 10; and
- 0 - 30 wt.% of further ingredients,
wherein the median diameter D50 of said pigment flakes is greater than 35% of the median particle diameter D50 of said spherical glass beads,
- in Laser Imaging Detection And Ranging (LIDAR) of said vehicle or of said coated substrate; and/or
- to improve the visibility of said vehicle or of said coated substrate under visible light conditions; and/or
- to prepare a 3-dimensional image of said vehicle or of said coated substrate.

In another aspect, the invention concerns the use of spherical glass beads having a median particle diameter D50, as measured with laser diffraction, between 1 and 150 µm, and having a refractive index, measured at a wavelength λ of 589 nm, between 1.7 and 2.8, as a transparency improver for radio waves in a coating layer comprising binder and metallic pigment flakes, said metallic pigment flakes having a median diameter D50, as measured with laser diffraction, between 2 and 75 µm, a thickness smaller than 1 µm and an aspect ratio (flake diameter/thickness) of at least 10, wherein the median diameter D50 of said metallic pigment flakes is greater than 35% of the median particle diameter D50 of said spherical glass beads.

Preferred embodiments defined in the context of the first, second and third aspect also apply to this further aspect.

### Further embodiments

In a fourth aspect, the invention concerns a vehicle having a frame or coachwork, wherein at least part of the outer surface of the frame or coachwork is covered with a coating, said coating comprising at least two layers, or
coated substrate, wherein the coating comprising at least two layers,
wherein the outer two or three layers are:
   (a) a basecoat layer;
   (b) optionally a tinted clearcoat layer on (a);
   (c) a clearcoat top layer on (a) or on (b);
wherein the basecoat layer (a) consists of, based on the weight of said basecoat layer (a):
   - 14.95 - 98.95 wt.% of binder;
   - 1 - 85 wt.% of spherical glass beads having a median particle diameter D50, as measured with laser diffraction, between 1 and less than 10 µm, and having a refractive index, measured at a wavelength λ of 589 nm, between 1.7 and 2.8;
   - 0.05 - 30 wt.% of pigment flakes chosen from the group consisting of metallic pigment flakes, pearlescent pigment flakes or a combination thereof, said pigment flakes having a median diameter D50, as measured with laser diffraction, between 1 and 75 µm, a thickness smaller than 1 µm and an aspect ratio (flake diameter/thickness) of at least 10; and
   - 0 - 30 wt.% of further ingredients.

In a fifth aspect, the invention concerns a Laser Imaging Detection And Ranging (LIDAR) process of the vehicle as defined in the fourth aspect, said process comprising the steps of:
(i) providing a LIDAR device comprising a source of electromagnetic radiation, a receiver and optionally a Global Positioning System (GPS);
(ii) transmitting electromagnetic radiation from the source of electromagnetic radiation of the LIDAR device to the vehicle;
(iii) scanning the electromagnetic radiation reflected by the coating of the vehicle by the receiver of the LIDAR device; and
(iv) computing from the differences between the transmitted electromagnetic radiation and the scanned reflected electromagnetic radiation, preferably as a function of time, one or more of:
   - the distance between the vehicle and the LIDAR device;
   - the acceleration of the vehicle;
   - the deceleration of the vehicle;
   - the direction of movement of the vehicle;
   - the speed of the vehicle, preferably the speed of the vehicle relative to that of the LIDAR device; and
   - a 3D image of the vehicle.

Another aspect of the invention concerns a Radio Detection And Ranging (RADAR) process comprising the steps of:
(i) providing a vehicle as defined in the fourth aspect with a RADAR device within the frame or coachwork, said RADAR device comprising a source of radio waves and a receiver, and wherein the vehicle optionally comprises a Global Positioning System (GPS);
(ii) transmitting radio waves from the source of radio waves of the RADAR device through the at least part of the outer surface of the frame or coachwork of the vehicle that is covered with the coating as defined in the fourth aspect to an object outside of the vehicle;
(iii) scanning the radio waves reflected by the object outside of the vehicle by the receiver of the RADAR device; and
(iv) computing from the differences between the transmitted radio waves and the scanned reflected radio waves, preferably as a function of time, one or more of:
   - the distance between the object and the RADAR device;
   - the acceleration of the object with respect to the RADAR device;
   - the deceleration of the object with respect to the RADAR device;
   - the direction of movement of the object with respect to the RADAR device; and
   - the speed of the object, preferably the speed of the object relative to that of the RADAR device.

In a sixth aspect, the invention concerns the use of the vehicle or the coated substrate, as defined in the fourth aspect:
- in Laser Imaging Detection And Ranging (LIDAR) of said vehicle or of said coated substrate; and/or
- to improve the visibility of said vehicle or of said coated substrate under visible light conditions; and/or
- to prepare a 3-dimensional image of said vehicle or of said coated substrate.

In another aspect, the invention concerns the use of spherical glass beads having a median particle diameter D50, as measured with laser diffraction, between 1 and 150 µm, and having a refractive index, measured at a wavelength λ of 589 nm, between 1.7 and 2.8, as a transparency improver for radio waves in a coating layer comprising binder and metallic pigment flakes, said metallic pigment flakes having a median diameter D50, as measured with laser diffraction, between 2 and 75 µm, a thickness smaller than 1 µm and an aspect ratio (flake diameter/thickness) of at least 10.

Preferred embodiments defined in the context of the first, second and third aspect also apply to the fourth, fifth and sixth aspect.

Thus, the invention has been described by reference to certain embodiments discussed above. It will be recognized that these embodiments are susceptible to various modifications and alternative forms well known to those of skill in the art.

Furthermore, for a proper understanding of this document and its claims, it is to be understood that the verb *'to comprise'* and its conjugations are used in its non-limiting sense to mean that items following the word are included, but items not specifically mentioned are not excluded. In addition, reference to an element by the indefinite article *'a'* or *'an'* does not exclude the possibility that more than one of the element is present, unless the context clearly requires that there be one and only one of the elements. The indefinite article *'a'* or *'an'* thus usually means *'at least one'.*

### EXAMPLES

### Materials

### Spherical glass beads

- Micro glass beads (AL), obtained from Jianxi Sunflex Light Retroreflective Material Co, Ltd., China, having a refractive index of about 2.2, measured at a wavelength λ of 589 nm, having a median particle diameter D50 of 40.4 µm, a D10 diameter of 37.3 µm and a D90 diameter of 44.1 µm, as measured with laser diffraction
- Micro glass beads (AS), obtained from Jianxi Sunflex Light Retroreflective Material Co, Ltd., China, having a refractive index of about 2.2, measured at a wavelength λ of 589 nm, having a median particle diameter D50 of 20 µm, a D10 diameter of 16.3 µm and a D90 diameter of 26.2 µm, as measured with laser diffraction.
- Micro glass beads (BS), obtained from Swarco, Austria, having a refractive index of about 2.1, measured at a wavelength λ of 589 nm, having a median particle diameter D50 of about 5 µm, and a D90 diameter of 10 µm, as measured with laser diffraction.
- Micro glass beads (CL), obtained from Jianxi Sunflex Light Retroreflective Material Co, Ltd., China, having a refractive index of about 1.9, measured at a wavelength λ of 589 nm, having a median particle diameter D50 of 40.4 µm, a D10 diameter of 34.9 µm and a D90 diameter of 44 µm, as measured with laser diffraction.
- Micro glass beads (CS), obtained from Jianxi Sunflex Light Retroreflective Material Co, Ltd., China, having a refractive index of about 1.9, measured at a wavelength λ of 589 nm, having a median particle diameter D50 of 20 µm, a D10 diameter of 14.7 µm and a D90 diameter of 25.1 µm, as measured with laser diffraction.

### Solvents

- Demi water
- Solvent part of Syrox S900 binder, Syrox S941 thinner, ACULYN^{™} Excel, AMP-Ultra^{®} PC 2000 and Acticide^{®} MBL

### Further ingredients

- Solids part of AMP-Ultra^{®} PC 2000, obtained from Angus Chemical Company; neutralizer
- Solids part of Acticide^{®} MBL, obtained from Thor; preservative
- Solids part of ACULYN^{™} Excel, obtained from DOW Chemical, HASE thickener

### Binder

Solids part of Syrox S900 binder and Syrox S941 thinner, obtained from Axalta Coating Systems

### Pigment flakes

- Xirallic^{®} T60-10 SW Crystal Silver, obtained from Merck KGaA, coated Al₂O₃ flakes, having a median diameter (D50) of about 18 µm, a thickness smaller than 1 µm and an aspect ratio (flake diameter/thickness) of more than 10 (Al₂O₃, TiO₂, SnO₂)
- Xirallic^{®} T61-10 WNT Crystal Silver, obtained from Merck KGaA, coated Al₂O₃ flakes, having a median diameter (D50) of about 11 µm, a thickness smaller than 1 µm and an aspect ratio (flake diameter/thickness) of more than 10 (Al₂O₃, TiO₂, SnO₂)
- Iriodin^{®} 9602 Silver-Grey SW, obtained from Merck Performance Materials Germany GmbH, having a median diameter (D50) of 22.3 µm, a thickness smaller than 1 µm and an aspect ratio (flake diameter/thickness) of more than 10 (Mica, TiO₂, Fe₂O₃ and SnO₂)
- Iriodin^{®} 9612 Silver-Grey Fine Satin SW, obtained from Merck Performance Materials Germany GmbH, having a median diameter (D50) of 7.2 µm, a thickness smaller than 1 µm and an aspect ratio (flake diameter/thickness) of more than 10 (Mica, TiO₂, Fe₂O₃ and SnO₂)

### Clearcoat composition

S5000 HS Top Clear / S6000 HS Activator Slow, clearcoat precursor composition, obtained from Axalta Coating Systems

### Compositions

Twelve aqueous precursor basecoat layer (a) compositions with different types of spherical glass beads and different types of pigment flakes were prepared as follows.

In a first step, for each type of spherical glass beads, an *'intermediate composition'* was prepared by adding the following ingredients (see section *'Materials'*) at ambient temperature (~20 °C) to a container in the following order: (1) demi water, (2) preservative Acticide^{®} MBL, (3) spherical glass beads, (4) AMP-Ultra^{®} PC 2000 neutralizer to adjust the pH, and (5) ACULYN^{™} Excel thickener. The resulting mixtures were stirred in a Dispermill Orange-line 18/186 during about 5 minutes, at ambient temperature.

The twelve aqueous precursor basecoat layer (a) compositions were prepared by putting Syrox S900 binder, Syrox S941 thinner, different types of pigment flakes (see section *'Materials'*) and an intermediate composition described *supra* in a beaker, followed by thorough mixing with a Dispermill Orange-line 18/186 during 5 - 10 minutes at ambient temperature (~20 °C). The types and the amounts (wt.%, based on the weight of the aqueous precursor basecoat layer (a) compositions) of the ingredients in the different aqueous precursor basecoat layer (a) compositions is shown in Tables 1 and 2. Tables 1 and 2 also list the ratio [%] of the median diameter D50 of the pigment flakes to the median particle diameter D50 of the spherical glass beads in the different aqueous precursor basecoat layer (a) compositions.

**Table 1: aqueous precursor basecoat layer (a) compositions**

| **Sample** | **# 4** | **# 9** |
|---|---|---|
| Ratio [%] | 55 | 18 |

| **Binder [wt.%]** | | |
|---|---|---|
| Syrox S900 (#) | 10.46 | 10.55 |
| Syrox S941 (#) | 2.60 | 2.50 |
| **Subtotal binder** | **13.06** | **13.05** |

| **Spherical glass beads [wt.%]** | | |
|---|---|---|
| Glass Beads AL - D₅₀=40.4 µm | 12.34 | 12.43 |
| **Subtotal spherical glass beads** | **12.34** | **12.43** |

| **Solvents [wt.%]** | | |
|---|---|---|
| Water | 6.91 | 6.96 |
| Syrox S900 (*) | 48.65 | 49.08 |
| Syrox S941 (*) | 15.71 | 15.17 |
| Further solvents ^{(§)} | 0.26 | 0.25 |
| **Subtotal solvents** | **71.53** | **71.46** |

| **Pigment flakes [wt.%]** | | |
|---|---|---|
| Iriodin^{®} Grey 22.3 µm | 2.97 | |
| Iriodin^{®} Grey Fine Satin 7.2 µm | | 2.96 |
| **Subtotal pigments flakes** | **2.97** | **2.96** |

| **Further ingredients [wt.%]** | | |
|---|---|---|
| Acticide^{®} MBL ^{(#)} | 0.02 | 0.02 |
| AMP-Ultra^{®} PC 2000 ^{(#)} | <0.01 | <0.01 |
| ACULYN^{™} Excel ^{(#)} | 0.08 | 0.08 |
| **Subtotal further ingredients** | **0.10** | **0.10** |
| **Total composition** | **100.00** | **100.00** |

| | | |
|---|---|---|
| (*) Solvent part of this ingredient (#) Solids parts of this ingredient (§) Solvent part of Acticide^{®} MBL, AMP-Ultra^{®} PC 2000 and ACULYN^{™} Excel | | |

**Table 2: aqueous precursor basecoat layer (a) compositions**

| **Sample** | **#11** | **# 12** | **# 13** | **# 14** | **# 15** | **# 16** | **# 17** | **# 18** | **# 19** | **# 20** |
|---|---|---|---|---|---|---|---|---|---|---|
| Ratio [%] | 90 | 45 | 90 | 45 | 360 | 55 | 27 | 55 | 27 | 220 |

| **Binder [wt.%]** | | | | | | | | | | |
|---|---|---|---|---|---|---|---|---|---|---|
| Syrox S900 ^{(#)} | 10.54 | 10.58 | 10.52 | 10.59 | 12.34 | 10.62 | 10.58 | 10.53 | 10.62 | 12.30 |
| Syrox S941 ^{(#)} | 2.50 | 2.47 | 2.42 | 2.46 | 2.45 | 2.43 | 2.47 | 2.50 | 2.42 | 2.50 |
| **Subtotal binder** | **13.04** | **13.05** | **12.94** | **13.05** | **14.79** | **13.05** | **13.05** | **13.03** | **13.04** | **14.80** |

| **Spherical glass beads [wt.%]** | | | | | | | | | | |
|---|---|---|---|---|---|---|---|---|---|---|
| CS D₅₀=20 µm | 12.48 | | | | | 12.54 | | | | |
| CL D₅₀=40.4 µm | | 12.50 | | | | | 12.52 | | | |
| AL D₅₀=40.4 µm | | | | 12.49 | | | | | 12.56 | |
| AS D₅₀=20 µm | | | 12.33 | | | | | 11.95 | | |
| BS D₅₀=5 µm | | | | | 6.02 | | | | | 5.95 |
| **Subt. glass beads** | **12.48** | **12.50** | **12.33** | **12.49** | **6.02** | **12.54** | **12.52** | **11.95** | **12.56** | **5.95** |

| **Solvents [wt.%]** | | | | | | | | | | |
|---|---|---|---|---|---|---|---|---|---|---|
| Water | 6.99 | 7.01 | 7.86 | 7.00 | 3.84 | 7.03 | 7.01 | 7.62 | 7.04 | 3.79 |
| Syrox S900 ^{(*)} | 49.01 | 49.21 | 48.91 | 49.27 | 57.41 | 49.36 | 49.21 | 48.95 | 49.39 | 57.21 |
| Syrox S941 ^{(*)} | 15.12 | 14.88 | 14.64 | 14.85 | 14.77 | 14.69 | 14.88 | 15.13 | 14.59 | 15.08 |
| Further solvents ^{(§)} | 0.26 | 0.26 | 0.27 | 0.26 | 0.13 | 0.25 | 0.26 | 0.26 | 0.26 | 0.13 |
| **Subtotal solvents** | **71.38** | **71.36** | **71.68** | **71.38** | **76.15** | **71.33** | **71.36** | **71.96** | **71.28** | **76.21** |

| **Pigment flakes [wt.%]** | | | | | | | | | | |
|---|---|---|---|---|---|---|---|---|---|---|
| Xirallic^{®} CS 18 µm | 3.00 | 2.99 | 2.95 | 2.98 | 2.99 | | | | | |
| Xirallic^{®} MS 11 µm | | | | | | 2.98 | 2.97 | 2.96 | 3.02 | 2.99 |
| **Subt. pigm. flakes** | **3.00** | **2.99** | **2.95** | **2.98** | **2.99** | **2.98** | **2.97** | **2.96** | **3.02** | **2.99** |

| **Further ingredients [wt.%]** | | | | | | | | | | |
|---|---|---|---|---|---|---|---|---|---|---|
| Acticide^{®} MBL ^{(#)} | 0.02 | 0.02 | 0.02 | 0.02 | 0.01 | 0.02 | 0.02 | 0.02 | 0.02 | 0.01 |
| AMP-Ultra^{®} PC 2000 ^{(#)} | <0.01 | <0.01 | <0.01 | <0.01 | <0.01 | <0.01 | <0.01 | <0.01 | <0.01 | <0.01 |
| ACULYN^{™} Excel ^{(#)} | 0.08 | 0.08 | 0.08 | 0.08 | 0.04 | 0.08 | 0.08 | 0.08 | 0.08 | 0.04 |
| **Subt. further ingred.** | **0.10** | **0.10** | **0.10** | **0.10** | **0.05** | **0.10** | **0.10** | **0.10** | **0.10** | **0.05** |
| **Total composition** | **100.00** | **100.00** | **100.00** | **100.00** | **100.00** | **100.00** | **100.00** | **100.00** | **100.00** | **100.00** |

| | | | | | | | | | | |
|---|---|---|---|---|---|---|---|---|---|---|
| (*) Solvent part of this ingredient (#) Solids parts of this ingredient (§) Solvent part of Acticide^{®} MBL, AMP-Ultra^{®} PC 2000 and ACULYN^{™} Excel | | | | | | | | | | |

### Example 1

All aqueous precursor basecoat layer (a) compositions were applied at ambient temperature (about 20°C) to planar white metal test plates (10.5 x 14.9 cm) having a vertical black bar (0.3 cm width) across the surface, using a spray gun (DV1.2 Mini) with a nozzle of 1.2 mm. Two types of layers were applied; *'normal layers'* and *'mist layers'.* For *'normal layers',* the spray gun was positioned 30-40 cm apart from the metal test plates and a pressure of 2.0 bar was applied. For *'mist layers',* the spray gun was positioned 40-50 cm apart from the metal test plates and a pressure of 1.5 bar was applied. The mist layer is a very thin layer of droplets *(i.e.* not a full layer) that is applied first to improve adhesion.

Drying was applied between applying subsequent *'normal layers'.* Some aqueous precursor basecoat layer (a) compositions were applied to the metal test plates as a mist layer followed by drying with a subsequent normal layer on top of the mist layer, followed by drying, and by applying a transparent topcoat layer again followed by drying (*'single basecoat layer',* or '*1L*'). Other aqueous precursor basecoat layer (a) compositions were applied to the metal test plates as a mist layer with two subsequent normal layers with intermediate drying and final drying, and by applying a transparent topcoat layer again followed by drying (*'double basecoat layer'* or *'2L'*). The transparent clearcoat top layer consisted of the clearcoat composition as defined in the section *'Materials'.* In summary, the coated substrates consisted of the metal test plate, a mist layer on top of the metal test plate, either one or two layers of basecoat on top of the mist layer and finally a transparent clearcoat top layer.

The compositions of the dried basecoat layers (a) are shown in Tables 3 and 4. Tables 3 and 4 also list the ratio [%] of the median diameter D50 of the pigment flakes to the median particle diameter D50 of the spherical glass beads in the different dried compositions.

**Table 3: basecoat layer (a) compositions**

| **Sample** | **# 4** | **# 9** |
|---|---|---|
| Ratio [%] | 55 | 18 |

| **Binder [wt.%]** | | |
|---|---|---|
| Syrox S900 ^{(#)} | 36.75 | 36.98 |
| Syrox S941 ^{(#)} | 9.13 | 8.79 |
| **Subtotal binder** | **45.88** | **45.77** |

| **Spherical glass beads [wt.%]** | | |
|---|---|---|
| Glass Beads AL - D₅₀=40.4 µm | 43.34 | 43.53 |
| **Subtotal spherical glass beads** | **43.34** | **43.53** |

| **Pigment flakes [wt.%]** | | |
|---|---|---|
| Iriodin^{®} Grey 22.3 µm | 10.44 | |
| Iriodin^{®} Grey Fine Satin 7.2 µm | | 10.36 |
| **Subtotal pigments flakes** | **10.44** | **10.36** |

| **Further ingredients [wt.%]** | | |
|---|---|---|
| Acticide^{®} MBL ^{(#)} | 0.06 | 0.06 |
| AMP-Ultra^{®} PC 2000 ^{(#)} | 0.02 | 0.02 |
| ACULYN^{™} Excel ^{(#)} | 0.26 | 0.26 |
| **Subtotal further ingredients** | **0.34** | **0.34** |
| **Total composition** | **100.00** | **100.00** |

| | | |
|---|---|---|
| (#) Solids parts of this ingredient | | |

**Table 4: basecoat (a) compositions**

| **Sample** | **#11** | **# 12** | **# 13** | **# 14** | **# 15** | **# 16** | **# 17** | **# 18** | **# 19** | **# 20** |
|---|---|---|---|---|---|---|---|---|---|---|
| Ratio [%] | 90 | 45 | 90 | 45 | 360 | 55 | 27 | 55 | 27 | 220 |

| **Binder [wt.%]** | | | | | | | | | | |
|---|---|---|---|---|---|---|---|---|---|---|
| Syrox S900 (#) | 36.84 | 36.96 | 37.13 | 37.02 | 51.77 | 37.03 | 36.96 | 37.55 | 37.00 | 51.71 |
| Syrox S941 (#) | 8.74 | 8.61 | 8.55 | 8.58 | 10.25 | 8.48 | 8.61 | 8.94 | 8.42 | 10.49 |
| **Subtotal binder** | **45.58** | **45.57** | **45.69** | **45.60** | **62.02** | **45.51** | **45.57** | **46.49** | **45.42** | **62.20** |

| **Spherical glass beads [wt.%]** | | | | | | | | | | |
|---|---|---|---|---|---|---|---|---|---|---|
| CS D₅₀=20 µm | 43.60 | | | | | 43.76 | | | | |
| CL D₅₀=40.4 µm | | 43.66 | | | | | 43.71 | | | |
| AL D₅₀=40.4 µm | | | | 43.64 | | | | | 43.73 | |
| AS D₅₀=20 µm | | | 43.53 | | | | | 42.62 | | |
| BS D₅₀=5 µm | | | | | 25.24 | | | | | 25.01 |
| **Subt. glass beads** | **43.60** | **43.66** | **43.53** | **43.64** | **25.24** | **43.76** | **43.71** | **42.62** | **43.73** | **25.01** |

| **Pigment flakes [wt.%]** | | | | | | | | | | |
|---|---|---|---|---|---|---|---|---|---|---|
| Xirallic^{®} CS 18 µm | 10.48 | 10.43 | 10.42 | 10.42 | 12.53 | | | | | |
| Xirallic^{®} MS 11 µm | | | | | | 10.39 | 10.38 | 10.54 | 10.51 | 12.58 |
| **Subt. pigm. flakes** | **10.48** | **10.43** | **10.42** | **10.42** | **12.53** | **10.39** | **10.38** | **10.54** | **10.51** | **12.58** |

| **Further ingredients [wt.%]** | | | | | | | | | | |
|---|---|---|---|---|---|---|---|---|---|---|
| Acticide^{®} MBL ^{(#)} | 0.06 | 0.06 | 0.06 | 0.06 | 0.04 | 0.06 | 0.06 | 0.06 | 0.06 | 0.04 |
| AMP-Ultra^{®} PC 2000 ^{(#)} | 0.02 | 0.02 | 0.02 | 0.02 | 0.01 | 0.02 | 0.02 | 0.02 | 0.02 | 0.01 |
| ACULYN^{™} Excel ^{(#)} | 0.26 | 0.26 | 0.28 | 0.26 | 0.16 | 0.26 | 0.26 | 0.27 | 0.026 | 0.16 |
| **Subt. further ingred.** | **0.34** | **0.34** | **0.36** | **0.34** | **0.21** | **0.34** | **0.34** | **0.35** | **0.34** | **0.21** |
| **Total composition** | **100.00** | **100.00** | **100.00** | **100.00** | **100.00** | **100.00** | **100.00** | **100.00** | **100.00** | **100.00** |

| | | | | | | | | | | |
|---|---|---|---|---|---|---|---|---|---|---|
| (#) Solids parts of this ingredient | | | | | | | | | | |

LIDAR detectability was determined by scanning the surface of the coated metal test plates with a Livox Tele-15 LIDAR device (Livox Technology Company Co., Ltd) at a wavelength of 905 nm under an angle of about 0 degrees (*i.e.* in a direction perpendicular to the coated surface). Scanning took place under daylight conditions. The Tele-15 LIDAR device was placed at a distance of about 20 meters from the surface of the coated metal test plates. The Tele-15 LIDAR device calculates reflectivity values for different areas of the surface of the coated metal test plates that is scanned, based on the ratio of reflected laser energy over incident laser energy, and generates a point cloud from these data. Every point in the point cloud has a corresponding reflectivity value between 0 and 255. Reflectivity values between 0 and 155 correspond to reflectivity within the range of 0-100% in the Lambertian reflection model, whereas values between 151 and 255 correspond to retroreflection. Lambertian reflectance is the property that defines an ideal matte or diffusely reflecting surface. The apparent brightness of a Lambertian surface to an observer is the same regardless of the observer's angle of view. Increased Lambertian reflectance of a surface is therefore very relevant in LIDAR applications because it allows the detection of a complete object at different angles of view.

All points in the point cloud having a reflectivity value in the range of 1 to 10 were counted, in the range of 11 to 20, in the range of 21 to 30, and so on, to create a histogram. The number count of each range was subsequently normalized based on the total number of points in the point cloud and expressed as percentage.

Table 5 lists the different coated metal test plates that were tested, the ratio [%] of the median diameter D50 of the pigment flakes to the median particle diameter D50 of the spherical glass beads, the number of basecoat layers (a) applied and the Figure wherein the histogram is shown.

**Table 5: LIDAR tests (about 0°) on coated white metal test plates**

| **Example** | **Basecoat layer** | **Ratio [%]** | **Metal plate** | **Degree [°]** | **Layers** | **Figure** |
|---|---|---|---|---|---|---|
| 1a | #13 | 90 | White | 0 | DL | 1A |
| 1b | #18 | 55 | White | 0 | DL | 1A |
| 1c | #13 | 90 | White | 0 | SL | 1B |
| 1d | #18 | 55 | White | 0 | SL | 1B |
| 1e | #14 | 45 | White | 0 | DL | 1C |
| 1f | #19 | 27 | White | 0 | DL | 1C |
| 1g | #14 | 45 | White | 0 | SL | |
| 1h | #19 | 27 | White | 0 | SL | |
| 1i | #11 | 90 | White | 0 | DL | 1D |
| 1j | #16 | 55 | White | 0 | DL | 1D |
| 1k | #12 | 45 | White | 0 | DL | 1E |
| 1l | #17 | 27 | White | 0 | DL | 1E |
| 1m | #15 | 257 | White | 0 | DL | 1F |
| 1n | #20 | 157 | White | 0 | DL | 1F |

It can be concluded from Figures 1A to 1F that all coated metal substrates show considerable LIDAR detectability under an angle of about 0 degrees (*i.e.* in a direction perpendicular to the coated surface).

The more the *'body'* of the histogram shifts to higher reflectivity values, the better the LIDAR detectability of the coated metal substrates. It follows from the individual Figures 1A to 1F that the *'body'* of the histogram shifts to higher reflectivity values for increased ratios of the median diameter D50 of the pigment flakes to the median particle diameter D50 of the spherical glass beads.

So, the inventors unexpectedly found that LIDAR detectability increases at higher ratios of the median diameter D50 of the pigment flakes to the median particle diameter D50 of the spherical glass beads.

### Example 2

LIDAR detectability of coated white metal test plates prepared as described in Example 1 was determined by scanning the surface of the coated metal test plates with a Livox Tele-15 LIDAR device (Livox Technology Company Co., Ltd) at a wavelength of 905 nm under an angle of 15 degrees. Table 6 lists the different coated metal test plates that were tested, the ratio [%] of the median diameter D50 of the pigment flakes to the median particle diameter D50 of the spherical glass beads, the number of basecoat layers (a) applied and the Figure wherein the histogram is shown.

**Table 6: LIDAR tests (15°) on coated light greyish metal test plates**

| **Example** | **Basecoat layer** | **Ratio [%]** | **Metal plate** | **Degree [°]** | **Layers** | **Figure** |
|---|---|---|---|---|---|---|
| 2a | #13 | 90 | White | 15 | DL | 2A |
| 2b | #18 | 55 | White | 15 | DL | 2A |
| 2c | #13 | 90 | White | 15 | SL | 2B |
| 2d | #18 | 55 | White | 15 | SL | 2B |
| 2e | #14 | 45 | White | 15 | DL | 2C |
| 2f | #19 | 27 | White | 15 | DL | 2C |
| 2g | #14 | 45 | White | 15 | SL | 2D |
| 2h | #19 | 27 | White | 15 | SL | 2D |
| 2i | #4 | 55 | White | 15 | DL | 2E |
| 2j | #9 | 18 | White | 15 | DL | 2E |

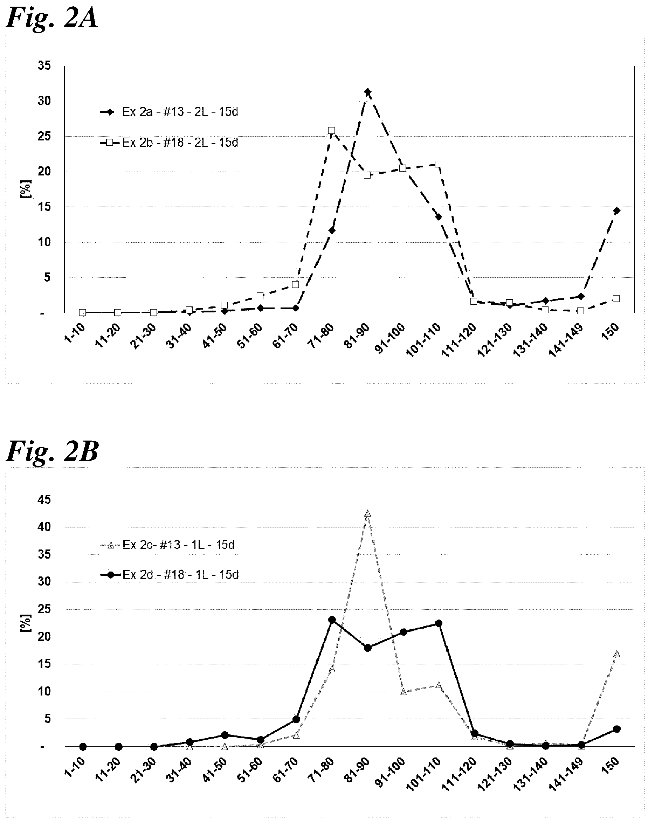

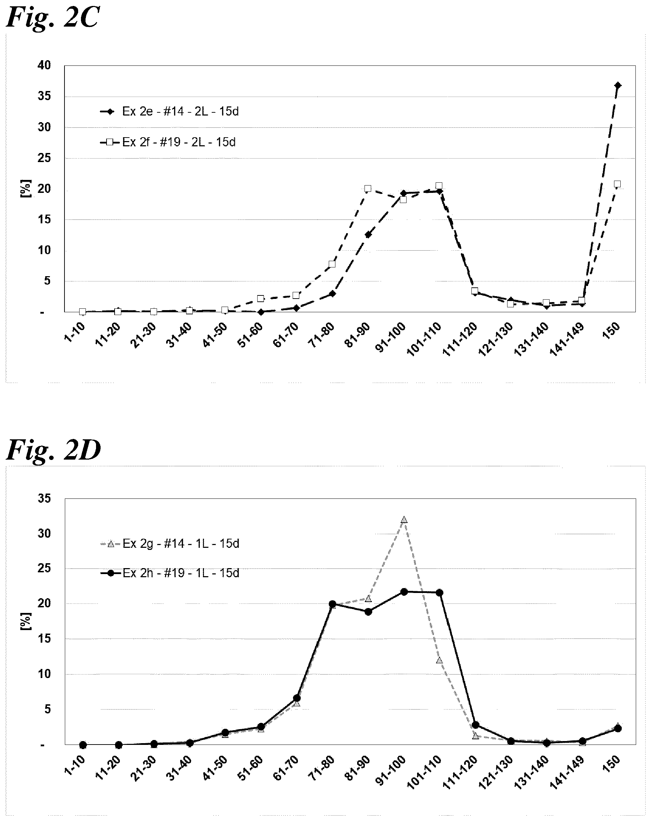

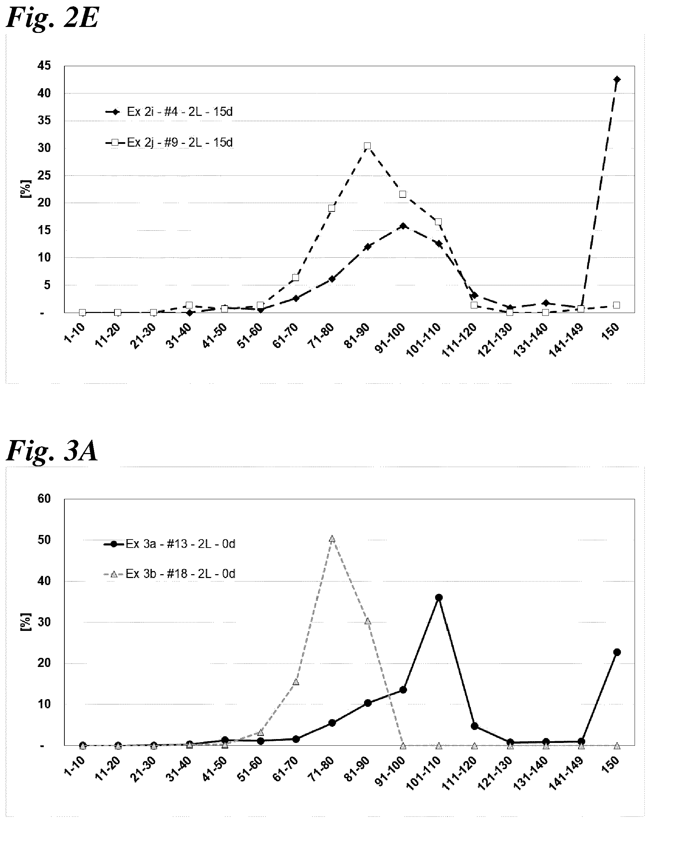

It can be concluded from Figures 2A to 2E that all coated metal substrates show considerable LIDAR detectability, even under an angle of 15 degrees. It also follows from the individual Figures 2A to 2E that the *'body'* of the histogram shifts to higher reflectivity values for increased ratios of the median diameter D50 of the pigment flakes to the median particle diameter D50 of the spherical glass beads. So, the inventors unexpectedly found that LIDAR detectability increases at higher ratios of the median diameter D50 of the pigment flakes to the median particle diameter D50 of the spherical glass beads, even under an angle of 15 degrees.

### Example 3

LIDAR detectability of coated metal test plates prepared as described in Example 1, but now on grey metal test plates (10.5 x 14.9 cm) having a vertical black bar (0.3 cm width) across the surface, was determined by scanning the surface of the coated metal test plates with a Livox Tele-15 LIDAR device (Livox Technology Company Co., Ltd) at a wavelength of 905 nm under an angle of about 0 degrees. Table 7 lists the different coated metal test plates that were tested, the ratio [%] of the median diameter D50 of the pigment flakes to the median particle diameter D50 of the spherical glass beads, the number of basecoat layers (a) applied and the Figure wherein the histogram is shown.

**Table 7: LIDAR tests (0°) on coated dark greyish metal test plates**

| **Example** | **Basecoat layer** | **Ratio [%]** | **Metal plate** | **Degree [°]** | **Layers** | **Figure** |
|---|---|---|---|---|---|---|
| 3a | # 13 | 90 | Grey | 0 | DL | 3A |
| 3b | # 18 | 55 | Grey | 0 | DL | 3A |
| 3c | # 14 | 45 | Grey | 0 | DL | 3B |
| 3d | # 19 | 27 | Grey | 0 | DL | 3B |
| 3e | # 15 | 257 | Grey | 0 | DL | 3C |
| 3f | # 20 | 157 | Grey | 0 | DL | 3C |
| 3g | #4 | 55 | Grey | 0 | DL | 3D |
| 3h | #9 | 18 | Grey | 0 | DL | 3D |

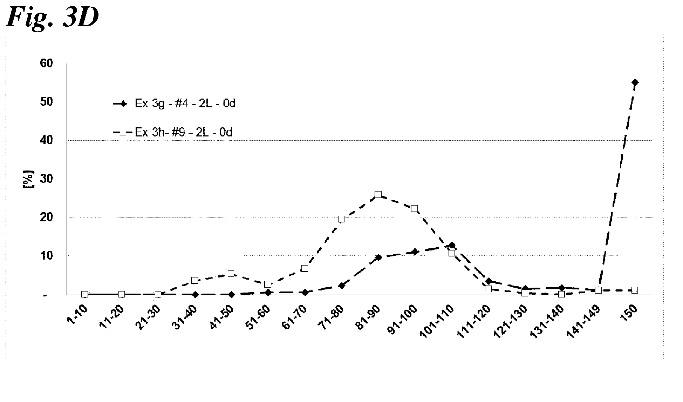

It can be concluded from Figures 3A to 3D that all coated metal substrates show considerable LIDAR detectability under an angle of about 0 degrees *(i.e.* in a direction perpendicular to the coated surface).

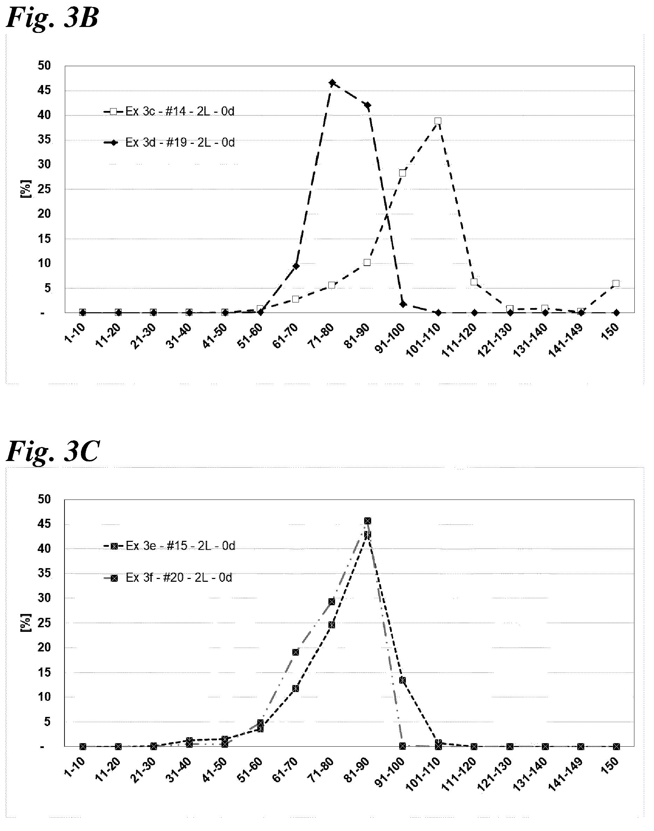

It also follows from the individual Figures 3A to 3D that the *'body'* of the histogram shifts to higher reflectivity values for increased ratios of the median diameter D50 of the pigment flakes to the median particle diameter D50 of the spherical glass beads. It can be inferred from a comparison of Figure 1A and 3A, from a comparison of Figure 1C and 3B and from a comparison of Figure 1F and 3C that this shift is more pronounced when darker substrates are coated.

## Claims

1. Vehicle having a frame or coachwork, wherein at least part of the outer surface of the frame or coachwork is covered with a coating, said coating comprising at least two layers,
wherein the outer two or three layers are:
(a) a basecoat layer;
(b) optionally a tinted clearcoat layer on (a);
(c) a clearcoat top layer on (a) or on (b);
wherein the basecoat layer (a) consists of, based on the weight of said basecoat layer (a):
• 14.95 - 98.95 wt.% of binder;
• 1 - 85 wt.% of spherical glass beads having a median particle diameter D50, as measured with laser diffraction, between 1 and 150 µm, and having a refractive index, measured at a wavelength λ of 589 nm, between 1.7 and 2.8;
• 0.05 - 30 wt.% of pigment flakes chosen from the group consisting of metallic pigment flakes, pearlescent pigment flakes or a combination thereof, said pigment flakes having a median diameter D50, as measured with laser diffraction, between 1 and 75 µm, a thickness smaller than 1 µm and an aspect ratio (flake diameter/thickness) of at least 10; and
• 0 - 30 wt.% of further ingredients,
wherein the median diameter D50 of said pigment flakes is greater than 35% of the median particle diameter D50 of said spherical glass beads.

2. Vehicle according to claim 1, wherein the amount of the pigment flakes chosen from the group consisting of metallic pigment flakes, pearlescent pigment flakes or a combination thereof in the basecoat layer (a) is 1 part by weight to between 1 and 30 part by weight of the spherical glass beads, preferably 1 part by weight to between 1 and 15 part by weight of the spherical glass beads, more preferably 1 part by weight to between 1 and 10 part by weight of the spherical glass beads.

3. Vehicle according to claim 1 or 2, wherein the median diameter D50 of the pigment flakes chosen from the group consisting of metallic pigment flakes, pearlescent pigment flakes or a combination thereof in the basecoat layer (a) is greater than 36% of the median particle diameter D50 of the spherical glass beads, preferably greater than 38%, such as greater than 40%, greater than 45%, greater than 50%, greater than 55%, greater than 60%, greater than 70%, greater than 90%, greater than 110% or greater than 130%.

4. Vehicle according to any one of claims 1 to 3, wherein the spherical glass beads in the basecoat layer (a) have a refractive index, measured at a wavelength λ of 589 nm, between 1.9 and 2.6, preferably between 2.0 and 2.3.

5. Vehicle according to any one of claims 1 to 4, wherein the spherical glass beads in the basecoat layer (a) have a median particle diameter D50, as measured with laser diffraction, between 1.5 and 100 µm, more preferably between 2 and 50 µm, even more preferably between 2.5 and 20 µm, still more preferably between 3 and 10 µm.

6. Vehicle according to any one of claims 1 to 5, wherein the further ingredients in the basecoat layer (a) are chosen from the group consisting of thickeners, foam control agents, luminescent agents, UV-absorbers, preservatives, dyes, curing initiators, organic pigments, inorganic pigments other than the metallic pigment flakes and pearlescent pigment flakes, and combinations thereof.

7. Vehicle according to any one of claims 1 to 6, wherein the metallic pigment flakes and pearlescent pigment flakes are chosen from the group consisting of:
(A) Metal pigment flakes or mica pigment flakes, optionally coated with at least one layer of one or more components chosen from the group consisting of metal oxides, metals, metal sulphides, titanium suboxides, titanium oxynitrides, FeO(OH), SiO₂, B₂O₃, GeO₂, MgF₂, metal alloys, rare earth compounds, and optionally coated with an outer layer comprising one or more colorants and a binder;
(B) Pigment flakes comprising Al₂O₃, SiO₂, glass, ceramic, graphite or mica platelets coated with at least one layer of one or more components chosen from the group consisting of metal oxides, metals, metal sulphides, titanium suboxides, titanium oxynitrides, FeO(OH), SiO₂, B₂O₃, GeO₂, metal alloys, rare earth compounds, and optionally coated with an outer layer comprising one or more colorants and a binder;
(C) Pigment flakes comprising Al₂O₃ platelets doped with one or more components chosen from the group consisting of TiO₂, ZrO₂, SiO₂, SnO₂, In₂O₃, ZnO and iron oxide, coated with at least one layer of one or more components chosen from the group consisting of metal oxides, metals, metal sulphides, titanium suboxides, titanium oxynitrides, FeO(OH), SiO₂, B₂O₃, GeO₂, metal alloys, rare earth compounds, and optionally coated with an outer layer comprising one or more colorants and a binder.

8. Vehicle according to any one of claims 1 to 7, wherein said coating comprises the following layers in the following order:
(i) optionally one or more primer layers on the outer surface of the frame or coachwork;
(ii) optionally one or more *'first'* basecoat layers different from basecoat layer (a) on the outer surface of the frame or coachwork or on (i);
(iii) optionally one or more clearcoat layers and/or tinted clearcoat layers on the outer surface of the frame or coachwork, on (i) or on (ii);
(iv) the basecoat layer (a) on the outer surface of the frame or coachwork, on (i), on (ii) or on (iii);
(v) optionally a tinted clearcoat layer (b) on basecoat layer (a); and
(vi) the clearcoat top layer (c) on basecoat layer (a) or on tinted clearcoat layer (b).

9. Vehicle according to any one of claims 1 to 8, wherein the total thickness of the basecoat layer (a) is between 1 and 300 µm.

10. Vehicle according to any one of claims 1 to 9, wherein more than 1%, preferably more than 10%, more preferably more than 30%, even more preferably more than 50%, still more preferably more than 75%, yet more preferably more than 90% of the outer surface of the frame or coachwork is covered with the coating.

11. Vehicle according to any one of claims 1 to 10, chosen from the group consisting of cars, lorries, trucks, bikes, mopeds, scooters, motorcycles, trains, trams, boats, ships, drones, skateboards, missiles, helicopters and aircrafts.

12. Laser Imaging Detection And Ranging (LIDAR) process of the vehicle according to any one of claims 1 to 11, said process comprising the steps of:
(i) providing a LIDAR device comprising a source of electromagnetic radiation, a receiver and optionally a Global Positioning System (GPS);
(ii) transmitting electromagnetic radiation from the source of electromagnetic radiation of the LIDAR device to the vehicle;
(iii) scanning the electromagnetic radiation reflected by the coating of the vehicle by the receiver of the LIDAR device; and
(iv) computing from the differences between the transmitted electromagnetic radiation and the scanned reflected electromagnetic radiation, preferably as a function of time, one or more of:
• the distance between the vehicle and the LIDAR device;
• the acceleration of the vehicle;
• the deceleration of the vehicle;
• the direction of movement of the vehicle;
• the speed of the vehicle, preferably the speed of the vehicle relative to that of the LIDAR device; and
• a 3D image of the vehicle.

13. Use of the vehicle according to any one of claims 1 to 11 or a coated substrate, wherein the coating comprising at least two layers of which the outer two or three layers are:
(a) a basecoat layer;
(b) optionally a tinted clearcoat layer on (a);
(c) a clearcoat top layer on (a) or (b);
wherein the basecoat layer (a) consists of, based on the weight of said basecoat layer (a):
• 14.95 - 98.95 wt.% of binder;
• 1 - 85 wt.% of spherical glass beads having a median particle diameter D50, as measured with laser diffraction, between 1 and 150 µm, and having a refractive index, measured at a wavelength λ of 589 nm, between 1.7 and 2.8;
• 0.05 - 30 wt.% of pigment flakes chosen from the group consisting of metallic pigment flakes, pearlescent pigment flakes or a combination thereof, said pigment flakes having a median diameter D50, as measured with laser diffraction, between 1 and 75 µm, a thickness smaller than 1 µm and an aspect ratio (flake diameter/thickness) of at least 10; and
• 0 - 30 wt.% of further ingredients,
wherein the median diameter D50 of said pigment flakes is greater than 35% of the median particle diameter D50 of said spherical glass beads,
• in Laser Imaging Detection And Ranging (LIDAR) of said vehicle or of said coated substrate; and/or
• to improve the visibility of said vehicle or of said coated substrate under visible light conditions; and/or
• to prepare a 3-dimensional image of said vehicle or of said coated substrate.

14. LIDAR process according to claim 12 or use according to claim 13, wherein the LIDAR uses electromagnetic radiation with a wavelength between 740 nm and 2500 nm, preferably with a wavelength between 750 nm and 1600 nm, such as 905 nm or 1550 nm.

## Patentansprüche

1. Fahrzeug, das einen Rahmen oder eine Karosserie aufweist, wobei mindestens ein Teil der äußeren Oberfläche des Rahmens oder der Karosserie mit einer Beschichtung bedeckt ist, die Beschichtung umfassend mindestens zwei Schichten, wobei die äußeren zwei oder drei Schichten:
(a) eine Basislackschicht;
(b) optional eine getönte Klarlackschicht auf (a);
(c) eine Klarlackdeckschicht auf (a) oder auf (b) sind;
wobei die Basislackschicht (a), basierend auf dem Gewicht der Basislackschicht (a), besteht aus:
• zu 14,95-98,95 Gew.-% Bindemittel;
• zu 1-85 Gew.-% kugelförmigen Glasperlen, die einen mittleren Partikeldurchmesser D50, wie mit Laserbeugung gemessen, zwischen 1 und 150 µm aufweisen, und einen Brechungsindex, gemessen bei einer Wellenlänge λ von 589 nm, zwischen 1,7 und 2,8 aufweisen;
• zu 0,05-30 Gew.-% Pigmentflocken, die aus der Gruppe ausgewählt sind, bestehend aus metallischen Pigmentflocken, Perlglanzpigmentflocken oder einer Kombination davon, wobei die Pigmentflocken einen mittleren Durchmesser D50, wie mit Laserbeugung gemessen, zwischen 1 und 75 µm, eine Dicke kleiner als 1 µm und einen Formfaktor (Flockendurchmesser/Dicke) von mindestens 10 aufweisen; und
• zu 0-30 Gew.-% weiteren Inhaltsstoffen,
wobei der mittlere Durchmesser D50 der Pigmentflocken größer als 35 % des mittleren Partikeldurchmessers D50 der kugelförmigen Glasperlen ist.

2. Fahrzeug nach Anspruch 1, wobei die Menge der Pigmentflocken, die aus der Gruppe ausgewählt sind, bestehend aus metallischen Pigmentflocken, Perlglanzpigmentflocken oder einer Kombination davon, in der Basislackschicht (a) 1 Gewichtsteil zu zwischen 1 und 30 Gewichtsteilen der kugelförmigen Glasperlen, vorzugsweise 1 Gewichtsteil zu zwischen 1 und 15 Gewichtsteilen der kugelförmigen Glasperlen, mehr bevorzugt 1 Gewichtsteil zu zwischen 1 und 10 Gewichtsteilen der kugelförmigen Glasperlen, beträgt.

3. Fahrzeug nach Anspruch 1 oder 2, wobei der mittlere Durchmesser D50 der Pigmentflocken, die aus der Gruppe ausgewählt sind, bestehend aus metallischen Pigmentflocken, Perlglanzpigmentflocken oder einer Kombination davon, in der Basislackschicht (a) größer als 36 % des mittleren Partikeldurchmessers D50 der kugelförmigen Glasperlen ist, vorzugsweise größer als 38 %, wie größer als 40 %, größer als 45 %, größer als 50 %, größer als 55 %, größer als 60 %, größer als 70 %, größer als 90 %, größer als 110 % oder größer als 130 %.

4. Fahrzeug nach einem der Ansprüche 1 bis 3, wobei die kugelförmigen Glasperlen in der Basislackschicht (a) einen Brechungsindex, gemessen bei einer Wellenlänge λ von 589 nm, zwischen 1,9 und 2,6, vorzugsweise zwischen 2,0 und 2,3, aufweisen.

5. Fahrzeug nach einem der Ansprüche 1 bis 4, wobei die kugelförmigen Glasperlen in der Basislackschicht (a) einen mittleren Partikeldurchmesser D50, wie mit Laserbeugung gemessen, zwischen 1,5 und 100 µm, mehr bevorzugt zwischen 2 und 50 µm, noch mehr bevorzugt zwischen 2,5 und 20 µm, umso mehr bevorzugt zwischen 3 und 10 µm, aufweisen.

6. Fahrzeug nach einem der Ansprüche 1 bis 5, wobei die weiteren Inhaltsstoffe in der Basislackschicht (a) aus der Gruppe ausgewählt sind, bestehend aus Verdickungsstoffen, Schaumkontrollmitteln, Lumineszenzmitteln, UV-Absorbern, Konservierungsstoffen, Farbstoffen, Härtungsinitiatoren, organischen Pigmenten, anorganischen Pigmenten außer den metallischen Pigmentflocken und Perlglanzpigmentflocken, und Kombinationen davon.

7. Fahrzeug nach einem der Ansprüche 1 bis 6, wobei die metallischen Pigmentflocken und Perlglanzpigmentflocken aus der Gruppe ausgewählt sind, bestehend aus:
(A) Metallpigmentflocken oder Glimmerpigmentflocken, die optional mit mindestens einer Schicht einer oder mehreren Komponenten beschichtet sind, die aus der Gruppe ausgewählt sind, bestehend aus Metalloxiden, Metallen, Metallsulfiden, Titansuboxiden, Titanoxynitriden, FeO(OH), SiO₂, B₂O₃, GeO₂, MgF₂, Metalllegierungen, Seltenerdverbindungen, und optional mit einer äußeren Schicht beschichtet sind, umfassend ein oder mehrere Färbemittel und ein Bindemittel;
(B) Pigmentflocken, umfassend Al₂O₃-, SiO₂-, Glas-, Keramik-, Graphit- oder Glimmerplättchen, die mit mindestens einer Schicht einer oder mehrerer Komponenten beschichtet sind, die aus der Gruppe ausgewählt sind, bestehend aus Metalloxiden, Metallen, Metallsulfiden, Titansuboxiden, Titanoxynitriden, FeO(OH), SiO₂, B₂O₃, GeO₂, Metalllegierungen, Seltenerdverbindungen, und optional mit einer äußeren Schicht beschichtet sind, umfassend ein oder mehrere Färbemittel und ein Bindemittel;
(C) Pigmentflocken, umfassend Al₂O₃-Plättchen, die mit einer oder mehreren Komponenten dotiert sind, die aus der Gruppe ausgewählt sind, bestehend aus TiO₂, ZrO₂, SiO₂, SnO₂, In₂O₃, ZnO und Eisenoxid, die mit mindestens einer Schicht einer oder mehrerer Komponenten beschichtet sind, die aus der Gruppe ausgewählt sind, bestehend aus Metalloxiden, Metallen, Metallsulfiden, Titansuboxiden, Titanoxynitriden, FeO(OH), SiO₂, B₂O₃, GeO₂, Metalllegierungen, Seltenerdverbindungen, und optional mit einer äußeren Schicht beschichtet sind, umfassend ein oder mehrere Färbemittel und ein Bindemittel.

8. Fahrzeug nach einem der Ansprüche 1 bis 7, wobei die Beschichtung die folgenden Schichten in der folgenden Reihenfolge umfasst:
(i) optional eine oder mehrere Grundierungsschichten auf der äußeren Oberfläche des Rahmens oder der Karosserie;
(ii) optional eine oder mehrere *'erste'* Basislackschichten, die sich von der Basislackschicht (a) unterscheiden, auf der äußeren Oberfläche des Rahmens oder der Karosserie oder auf (i);
(iii) optional eine oder mehrere Klarlackschichten und/oder getönte Klarlackschichten auf der äußeren Oberfläche des Rahmens oder der Karosserie, auf (i) oder auf (ii);
(iv) die Basislackschicht (a) auf der äußeren Oberfläche des Rahmens oder der Karosserie, auf (i), auf (ii) oder auf (iii);
(v) optional eine getönte Klarlackschicht (b) auf der Basislackschicht (a); und
(vi) die Klarlackdeckschicht (c) auf der Basislackschicht (a) oder auf der getönten Klarlackschicht (b).

9. Fahrzeug nach einem der Ansprüche 1 bis 8, wobei die Gesamtdicke der Basislackschicht (a) zwischen 1 und 300 µm beträgt.

10. Fahrzeug nach einem der Ansprüche 1 bis 9, wobei mehr als 1 %, vorzugsweise mehr als 10 %, mehr bevorzugt mehr als 30 %, noch mehr bevorzugt mehr als 50 %, umso mehr bevorzugt mehr als 75 %, sogar mehr bevorzugt mehr als 90 %, der äußeren Oberfläche des Rahmens oder der Karosserie mit der Beschichtung bedeckt sind.

11. Fahrzeug nach einem der Ansprüche 1 bis 10, das aus der Gruppe ausgewählt ist, bestehend aus Autos, Lastwagen, Lastkraftwagen, Fahrrädern, Mopeds, Rollern, Motorrädern, Zügen, Straßenbahnen, Booten, Schiffen, Drohnen, Skateboards, Flugkörpern, Hubschraubern und Luftfahrzeugen.

12. Laser Imaging Detection And Ranging-Verfahren (LIDAR-Verfahren) des Fahrzeugs nach einem der Ansprüche 1 bis 11, das Verfahren umfassend die Schritte:
(i) Bereitstellen einer LIDAR-Vorrichtung, umfassend eine Quelle elektromagnetischer Strahlung, einen Empfänger und optional ein Global Positioning System (GPS);
(ii) Übertragen elektromagnetischer Strahlung von der Quelle elektromagnetischer Strahlung der LIDAR-Vorrichtung an das Fahrzeug;
(iii) Abtasten der elektromagnetischen Strahlung, die durch die Beschichtung des Fahrzeugs reflektiert wird, durch den Empfänger der LIDAR-Vorrichtung; und
(iv) Berechnen, aus den Unterschieden zwischen der übertragenen elektromagnetischen Strahlung und der abgetasteten reflektierten elektromagnetischen Strahlung, vorzugsweise als eine Funktion von Zeit, eines oder mehrerer:
• des Abstands zwischen dem Fahrzeug und der LIDAR-Vorrichtung;
• der Beschleunigung des Fahrzeugs;
• der Abbremsung des Fahrzeugs;
• der Richtung einer Bewegung des Fahrzeugs;
• der Geschwindigkeit des Fahrzeugs, vorzugsweise der Geschwindigkeit des Fahrzeugs relativ zu der der LIDAR-Vorrichtung; und
• eines 3D-Bilds des Fahrzeugs.

13. Verwendung des Fahrzeugs nach einem der Ansprüche 1 bis 11 oder eines beschichteten Substrats, wobei die Beschichtung umfassend mindestens zwei Schichten, von denen die äußeren zwei oder drei Schichten:
(a) eine Basislackschicht;
(b) optional eine getönte Klarlackschicht auf (a);
(c) eine Klarlackdeckschicht auf (a) oder (b) sind;
wobei die Basislackschicht (a), basierend auf dem Gewicht der Basislackschicht (a), besteht aus:
• zu 14,95-98,95 Gew.-% Bindemittel;
• zu 1-85 Gew.-% kugelförmigen Glasperlen, die einen mittleren Partikeldurchmesser D50, wie mit Laserbeugung gemessen, zwischen 1 und 150 µm aufweisen, und einen Brechungsindex, gemessen bei einer Wellenlänge λ von 589 nm, zwischen 1,7 und 2,8 aufweisen;
• zu 0,05-30 Gew.-% Pigmentflocken, die aus der Gruppe ausgewählt sind, bestehend aus metallischen Pigmentflocken, Perlglanzpigmentflocken oder einer Kombination davon, wobei die Pigmentflocken einen mittleren Durchmesser D50, wie mit Laserbeugung gemessen, zwischen 1 und 75 µm, eine Dicke kleiner als 1 µm und einen Formfaktor (Flockendurchmesser/Dicke) von mindestens 10 aufweisen; und
• zu 0-30 Gew.-% weiteren Inhaltsstoffen,
wobei der mittlere Durchmesser D50 der Pigmentflocken größer als 35 % des mittleren Partikeldurchmessers D50 der kugelförmigen Glasperlen ist,
• bei Laser Imaging Detection And Ranging (LIDAR) des Fahrzeugs oder des beschichteten Substrats; und/oder
• um die Sichtbarkeit des Fahrzeugs oder des beschichteten Substrats unter Bedingungen mit sichtbarem Licht zu verbessern; und/oder
• um ein 3-dimensionales Bild des Fahrzeugs oder des beschichteten Substrats zu erstellen.

14. LIDAR-Verfahren nach Anspruch 12 oder Verwendung nach Anspruch 13, wobei das LIDAR elektromagnetische Strahlung mit einer Wellenlänge zwischen 740 nm und 2500 nm, vorzugsweise mit einer Wellenlänge zwischen 750 nm und 1600 nm, wie 905 nm oder 1550 nm, verwendet.

## Revendications

1. Véhicule ayant un châssis ou une carrosserie, dans lequel au moins une partie de la surface externe du châssis ou de la carrosserie est recouverte d'un revêtement, ledit revêtement comprenant au moins deux couches, dans lequel les deux ou trois couches externes sont :
(a) une couche de revêtement de base ;
(b) optionnellement une couche de revêtement transparent teinté sur (a) ;
(c) une couche supérieure de revêtement transparent sur (a) ou sur (b) ;
dans lequel la couche de revêtement de base (a) est constituée, sur la base du poids de ladite couche de revêtement de base (a), de :
• 14,95 à 98,95 % en poids de liant ;
• 1 à 85 % en poids de perles de verre sphériques ayant un diamètre médian de particules D50, tel que mesuré par diffraction laser, compris entre 1 et 150 µm, et ayant un indice de réfraction, mesuré à une longueur d'onde λ de 589 nm, compris entre 1,7 et 2,8 ;
• 0,05 à 30 % en poids de paillettes de pigment choisies dans le groupe constitué de paillettes de pigment métalliques, de paillettes de pigment nacrées ou d'une combinaison de celles-ci, lesdites paillettes de pigment ayant un diamètre médian D50, tel que mesuré par diffraction laser, compris entre 1 et 75 µm, une épaisseur inférieure à 1 µm et un rapport de forme (diamètre/épaisseur de paillette) d'au moins 10 ; et
• 0 à 30 % en poids d'autres ingrédients,
dans lequel le diamètre médian D50 desdites paillettes de pigment est supérieur à 35 % du diamètre médian de particules D50 desdites perles de verre sphériques.

2. Véhicule selon la revendication 1, dans lequel la quantité des paillettes de pigment choisies dans le groupe constitué de paillettes de pigment métalliques, de paillettes de pigment nacrées ou d'une combinaison de celles-ci dans la couche de revêtement de base (a) est de 1 partie en poids à entre 1 et 30 parties en poids des perles de verre sphériques, de préférence 1 partie en poids à entre 1 à 15 parties en poids des perles de verre sphériques, plus préférablement 1 partie en poids à entre 1 et 10 partie en poids des perles de verre sphériques.

3. Véhicule selon la revendication 1 ou 2, dans lequel le diamètre médian D50 des paillettes de pigment choisies dans le groupe constitué de paillettes de pigment métalliques, de paillettes de pigment nacrées ou d'une combinaison de celles-ci dans la couche de revêtement de base (a) est supérieur à 36 % du diamètre médian de particules D50 des perles de verre sphériques, de préférence supérieur à 38 %, tel que supérieur à 40 %, supérieur à 45 %, supérieur à 50 %, supérieur à 55 %, supérieur à 60 %, supérieur à 70 %, supérieur à 90 %, supérieur à 110 % ou supérieur à 130 %.

4. Véhicule selon l'une quelconque des revendications 1 à 3, dans lequel les perles de verre sphériques dans la couche de revêtement de base (a) ont un indice de réfraction, mesuré à une longueur d'onde λ de 589 nm, compris entre 1,9 et 2,6, de préférence entre 2,0 et 2,3.

5. Véhicule selon l'une quelconque des revendications 1 à 4, dans lequel les perles de verre sphériques dans la couche de revêtement de base (a) ont un diamètre médian de particules D50, tel que mesuré par diffraction laser, compris entre 1,5 et 100 µm, plus préférablement entre 2 et 50 µm, encore plus préférablement entre 2,5 et 20 µm, encore davantage plus préférablement entre 3 et 10 µm.

6. Véhicule selon l'une quelconque des revendications 1 à 5, dans lequel les autres ingrédients dans la couche de revêtement de base (a) sont choisis dans le groupe constitué d'épaississants, d'agents anti-mousses, d'agents luminescents, d'absorbeurs d'UV, de conservateurs, de colorants, d'initiateurs de durcissement, de pigments organiques, de pigments inorganiques autres que les paillettes de pigment métalliques et les paillettes de pigment nacrées, et de combinaisons de ceuxci.

7. Véhicule selon l'une quelconque des revendications 1 à 6, dans lequel les paillettes de pigment métalliques et les paillettes de pigment nacrées sont choisies dans le groupe constitué de :
(A) paillettes de pigment métalliques ou paillettes de pigment de mica, optionnellement revêtues d'au moins une couche d'un ou plusieurs composants choisis dans le groupe constitué d'oxydes métalliques, de métaux, de sulfures métalliques, de sous-oxydes de titane, d'oxynitrures de titane, de FeO(OH), de SiO₂, de B₂O₃, de GeO₂, de MgF₂, d'alliages métalliques, de composés de terres rares, et optionnellement revêtues d'une couche externe comprenant un ou plusieurs colorants et un liant ;
(B) paillettes de pigment comprenant des plaquettes d'Al₂O₄, de SiO₂, de verre, de céramique, de graphite ou de mica revêtues d'au moins une couche d'un ou plusieurs composants choisis dans le groupe constitué d'oxydes métalliques, de métaux, de sulfures métalliques, de sous-oxydes de titane, d'oxynitrures de titane, de FeO(OH), de SiO₂, de B₂O₃, de GeO₂, d'alliages métalliques, de composés de terres rares, et optionnellement revêtues d'une couche externe comprenant un ou plusieurs colorants et un liant ;
(C) paillettes de pigment comprenant des plaquettes d'Al₂O₃ dopées avec un ou plusieurs composants choisis dans le groupe constitué de TiO₂, de ZrO₂, de SiO₂, de SnO₂, d'In₂O₃, de ZnO et d'oxyde de fer, revêtues d'au moins une couche d'un ou plusieurs composants choisis dans le groupe constitué d'oxydes métalliques, de métaux, de sulfures métalliques, de sous-oxydes de titane, d'oxynitrures de titane, de FeO(OH), de SiO₂, de B₂O₃, de GeO₂, d'alliages métalliques, de composés de terres rares, et optionnellement revêtues d'une couche externe comprenant un ou plusieurs colorants et un liant.

8. Véhicule selon l'une quelconque des revendications 1 à 7, dans lequel ledit revêtement comprend les couches suivantes dans l'ordre suivant :
(i) optionnellement une ou plusieurs couches d'apprêt sur la surface externe du châssis ou de la carrosserie ;
(ii) optionnellement une ou plusieurs « *premières* » couches de revêtement de base différentes d'une couche de revêtement de base (a) sur la surface externe du châssis ou de la carrosserie ou sur (i) ;
(iii) optionnellement une ou plusieurs couches de revêtement transparent et/ou des couches de revêtement transparent teinté sur la surface externe du châssis ou de la carrosserie, sur (i) ou sur (ii) ;
(iv) la couche de revêtement de base (a) sur la surface externe du châssis ou de la carrosserie, sur (i), sur (ii) ou sur (iii) ;
(v) optionnellement une couche de revêtement transparent teinté (b) sur une couche de revêtement de base (a) ; et
(vi) la couche supérieure de revêtement transparent (c) sur la couche de revêtement de base (a) ou sur la couche de revêtement transparent teinté (b).

9. Véhicule selon l'une quelconque des revendications 1 à 8, dans lequel l'épaisseur totale de la couche de revêtement de base (a) est comprise entre 1 et 300 µm.

10. Véhicule selon l'une quelconque des revendications 1 à 9, dans lequel plus de 1 %, de préférence plus de 10 %, plus préférablement plus de 30 %, encore plus préférablement plus de 50 %, encore davantage plus préférablement plus de 75 %, le plus préférablement plus de 90 % de la surface externe du châssis ou de la carrosserie est recouverte du revêtement.

11. Véhicule selon l'une quelconque des revendications 1 à 10, choisi dans le groupe constitué de voitures, de poids lourds, de camions, de vélos, de cyclomoteurs, de scooters, de motocycles, de trains, de tramways, de bateaux, de navires, de drones, de planches à roulettes, de missiles, d'hélicoptères et d'aéronefs.

12. Procédé de détection et de télémétrie par imagerie laser (LIDAR) du véhicule selon l'une quelconque des revendications 1 à 11, ledit procédé comprenant les étapes consistant à :
(i) fournir un dispositif LIDAR comprenant une source de rayonnement électromagnétique, un récepteur et optionnellement un système mondial de localisation (GPS) ;
(ii) transmettre un rayonnement électromagnétique à partir de la source de rayonnement électromagnétique du dispositif LIDAR au véhicule ;
(iii) balayer le rayonnement électromagnétique réfléchi par le revêtement du véhicule par le récepteur du dispositif LIDAR ; et
(iv) calculer, à partir des différences entre le rayonnement électromagnétique transmis et le rayonnement électromagnétique réfléchi balayé, de préférence en fonction du temps, l'une ou plusieurs parmi :
• la distance entre le véhicule et le dispositif LIDAR ;
• l'accélération du véhicule ;
• la décélération du véhicule ;
• la direction de déplacement du véhicule ;
• la vitesse du véhicule, de préférence la vitesse du véhicule par rapport à celle du dispositif LIDAR ; et
• une image 3D du véhicule.

13. Utilisation du véhicule selon l'une quelconque des revendications 1 à 11 ou d'un substrat revêtu, dans laquelle le revêtement comprenant au moins deux couches dont les deux ou trois couches externes sont :
(a) une couche de revêtement de base ;
(b) optionnellement une couche de revêtement transparent teinté sur (a) ;
(c) une couche supérieure de revêtement transparent sur (a) ou (b) ;
dans lequel la couche de revêtement de base (a) est constituée, sur la base du poids de ladite couche de revêtement de base (a), de :
• 14,95 à 98,95 % en poids de liant ;
• 1 à 85 % en poids de perles de verre sphériques ayant un diamètre médian de particules D50, tel que mesuré par diffraction laser, compris entre 1 et 150 µm, et ayant un indice de réfraction, mesuré à une longueur d'onde λ de 589 nm, compris entre 1,7 et 2,8 ;
• 0,05 à 30 % en poids de paillettes de pigment choisies dans le groupe constitué de paillettes de pigment métalliques, de paillettes de pigment nacrées ou d'une combinaison de celles-ci, lesdites paillettes de pigment ayant un diamètre médian D50, tel que mesuré par diffraction laser, compris entre 1 et 75 µm, une épaisseur inférieure à 1 µm et un rapport de forme (diamètre/épaisseur de paillette) d'au moins 10 ; et
• 0 à 30 % en poids d'autres ingrédients,
dans lequel le diamètre médian D50 desdites paillettes de pigment est supérieur à 35 % du diamètre médian de particules D50 desdites perles de verre sphériques,
• dans la détection et la télémétrie par imagerie laser (LIDAR) dudit véhicule ou dudit substrat revêtu ; et/ou
• pour améliorer la visibilité dudit véhicule ou dudit substrat revêtu dans des conditions de lumière visible ; et/ou
• pour préparer une image en trois dimensions dudit véhicule ou dudit substrat revêtu.

14. Procédé de LIDAR selon la revendication 12 ou utilisation selon la revendication 13, dans lequel la LIDAR utilise un rayonnement électromagnétique d'une longueur d'onde comprise entre 740 nm et 2 500 nm, de préférence d'une longueur d'onde comprise entre 750 nm et 1 600 nm, tel que 905 nm ou 1 550 nm.
